# EUROPEAN PATENT APPLICATION

(11) **EP 4 167 649 A1**
(43) Date of publication of application: **19.04.2023**
(21) Application number: 21822796.5
(22) Date of filing: 01.06.2021
(51) Int. Cl.: H04W 48/14

(54) **COMMUNICATION SYSTEM, COMMUNICATION TERMINAL, AND MANAGEMENT DEVICE**

(30) Priority: 12.06.2020 JP 2020102297
(71) Applicant: MITSUBISHI ELECTRIC CORPORATION, Chiyoda-ku Tokyo 100-8310 (JP)
(72) Inventor: SHIMODA Tadahiro, Tokyo 100-8310 (JP); MOCHIZUKI Mitsuru, Tokyo 100-8310 (JP)
(74) Representative: Sajda, Wolf E.
(86) International application number: PCT/JP2021/020812
(87) International publication number: WO 2021/251210

(57) **Abstract**

A communication system (210) includes: a communication terminal (202); a base station (217) configured to perform radio communication with the communication terminal (202); and a management device (214) managing access to the communication terminal (202) through the base station (217). The communication terminal (202) starts a predefined process for changing Closed Access Group (CAG) information. The management device (214) transmits the CAG information to the communication terminal (202) in response to starting the predefined process by the communication terminal (202).

## Description

### TECHNICAL FIELD

The present invention relates to a radio communication technology.

### BACKGROUND ART

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

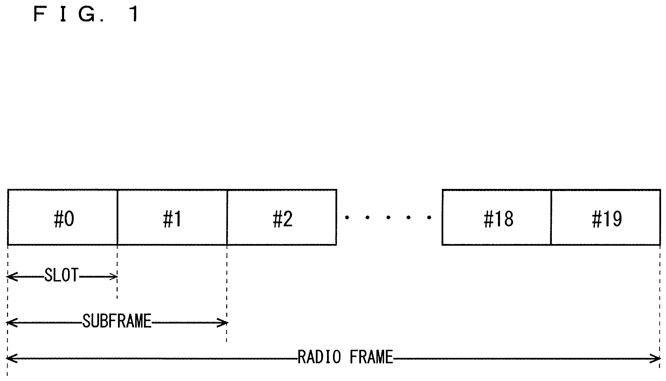

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgment (Ack) / negative acknowledgment (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a data demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions validly by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 18). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported. Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS38.211 V16.0.0)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

Furthermore, several new technologies have been studied in 3GPP. Examples of the new technologies include Non Public Networks (NPNs) (see Non-Patent Documents 23, 24, and 31). Furthermore, supporting services using sidelink (SL) communication not only in the EPS but also in the 5G core system has been studied (Non-Patent Documents 1, 16, 22, 26, 27, and 28). Examples of the services using the SL communication include V2X services and proximity services.

### PRIOR-ART DOCUMENTS

### NON-PATENT DOCUMENTS

Non-Patent Document 1: 3GPP TS 36.300 V16.0.0
Non-Patent Document 2: 3GPP S1-083461
Non-Patent Document 3: 3GPP TR 36.814 V9.2.0
Non-Patent Document 4: 3GPP TR 36.912 V15.0.0
Non-Patent Document 5: "Scenarios, requirements and KPIs for 5G mobile and wireless system", ICT-317669-METIS/D1.1
Non-Patent Document 6: 3GPP TR 23.799 V14.0.0
Non-Patent Document 7: 3GPP TR 38.801 V14.0.0
Non-Patent Document 8: 3GPP TR 38.802 V14.2.0
Non-Patent Document 9: 3GPP TR 38.804 V14.0.0
Non-Patent Document 10: 3GPP TR 38.912 V15.0.0
Non-Patent Document 11: 3GPP RP-172115
Non-Patent Document 12: 3GPP TS 37.340 V16.0.0
Non-Patent Document 13: 3GPP TS 38.211 V16.0.0
Non-Patent Document 14: 3GPP TS 38.213 V16.0.0
Non-Patent Document 15: 3GPP TS 38.214 V16.0.0
Non-Patent Document 16: 3GPP TS 38.300 V16.1.0
Non-Patent Document 17: 3GPP TS 38.321 V15.8.0
Non-Patent Document 18: 3GPP TS 38.212 V16.0.0
Non-Patent Document 19: 3GPP RP-161266
Non-Patent Document 20: 3GPP RP-193254
Non-Patent Document 21: 3GPP S2-2001467
Non-Patent Document 22: 3GPP TS 23.285 V16.2.0
Non-Patent Document 23: 3GPP RP-192724
Non-Patent Document 24: RP-20XXXX Draft email discussion on eNPN_E_to_APT_DCM_CMCC.docx
Non-Patent Document 25: 3GPP TS 23.502 V16.4.0
Non-Patent Document 26: 3GPP TS 23.287 V16.2.0
Non-Patent Document 27: 3GPP TS 23.501 V16.4.0
Non-Patent Document 28: 3GPP TR 37.985 V1.1.0
Non-Patent Document 29: 3GPP TR 23.703 V12.0.0
Non-Patent Document 30: 3GPP TS 38.331 V16.0.0
Non-Patent Document 31: 3GPP R2-2001155

### SUMMARY

### PROBLEMS TO BE SOLVED BY THE INVENTION

One type of the NPNs is Public Network Integrated NPNs. In the PNI-NPNs, a NW is identified using a Closed Access Group (CAG) (see Non-Patent Document 27 (TS23.501)). CAG information is used as information on the CAG. The AMF notifies the UE of the CAG information when the UE registers in a NW (Non-Patent Document 25 (TS23.502)). What is proposed is NW-initiated change and UE-initiated change as a method for changing the CAG information (see Non-Patent Documents 24 (RP-20XXXX) and 31(R2-2001155)).

However, none discloses a UE-initiated procedure for changing the CAG information. Consequently, the UE cannot initiate a change in the CAG information. The communication after changing the CAG information has a possibility of dissatisfying a predetermined QoS.

Furthermore, supporting various services using the SL communication (also referred to as the PC5 communication) not only in the EPS but also in the 5G core system has been studied (Non-Patent Documents 1, 16, 20, 21, 22, and 23). Communication is performed between devices in the SL communication. In the SL communication, not only the direct communication between devices but also the UE-to-UE indirect communication through a relay and the communication between the UE and a NW through a relay have been proposed (Non-Patent Document 29). In such a communication through a relay, how to satisfy the QoS required for a service, how to satisfy low latency characteristics required for the service, and how to enhance the use efficiency of resources to be used in the SL communication are problems.

In view of the problems, one of the objects of the present invention is to provide better communication by maintaining the QoS required for the service.

### MEANS TO SOLVE THE PROBLEMS

A communication system according to the present invention includes: a communication terminal; a base station configured to perform radio communication with the communication terminal; and a management device managing access to the communication terminal through the base station, wherein the communication terminal starts a predefined process for changing Closed Access Group (CAG) information, and the management device transmits the CAG information to the communication terminal in response to starting the predefined process by the communication terminal.

A communication terminal according to this invention connected to a management device through a base station, the management device managing access to the communication terminal, wherein the communication terminal starts a predefined process for changing Closed Access Group (CAG) information, and causes the management device to transmit the CAG information to the communication terminal when starting the predefined process.

A management device according to this invention managing access to a communication terminal connected through a base station, wherein the management device transmits Closed Access Group (CAG) information to the communication terminal, in response to starting a predefined process by the communication terminal for changing the CAG information.

### EFFECTS OF THE INVENTION

The present invention can provide better communication.

The object, features, aspects and advantages of the present invention will become more apparent from the following detailed description and the accompanying drawings of the present invention.

### BRIEF DESCRIPTION OF THE DRAWINGS

- FIG. 1: is a diagram illustrating the configuration of a radio frame for use in an LTE communication system.
- FIG. 2: is a block diagram showing the overall configuration of an LTE communication system 200 under discussion of 3GPP.
- FIG. 3: is a block diagram illustrating an overall configuration of a NR communication system 210 that has been discussed in 3GPP.
- FIG. 4: illustrates a structure of the DC to be performed by an eNB and a gNB that are connected to the EPC.
- FIG. 5: illustrates a structure of the DC to be performed by gNBs that are connected to the NG core.
- FIG. 6: illustrates a structure of the DC to be performed by the eNB and the gNB that are connected to the NG core.
- FIG. 7: illustrates a structure of the DC to be performed by the eNB and the gNB that are connected to the NG core.
- FIG. 8: is a block diagram showing the configuration of a user equipment 202 shown in FIG. 2.
- FIG. 9: is a block diagram showing the configuration of a base station 203 shown in FIG. 2.
- FIG. 10: is a block diagram showing the configuration of an MME.
- FIG. 11: is a block diagram illustrating a configuration of the 5GC.
- FIG. 12: is a flowchart showing an outline from a cell search to an idle state operation performed by a communication terminal (UE) in LTE communication system.
- FIG. 13: illustrates an example structure of a cell in an NR system.
- FIG. 14: is a sequence diagram illustrating UE-initiated operations for changing the CAG information according to the first embodiment.
- FIG. 15: is a schematic diagram illustrating cells that the high-altitude UE can receive according to the second embodiment.
- FIG. 16: is a sequence diagram illustrating operations for detecting a PCI collision by the UE and changing a PCI of a serving cell according to the second embodiment.
- FIG. 17: is a sequence diagram illustrating operations for detecting a PCI collision by the UE and changing a PCI of a colliding cell according to the second embodiment.
- FIG. 18: is a sequence diagram illustrating operations for detecting a PCI collision by the UE and changing the PCI of the serving cell according to the second embodiment.
- FIG. 19: is a sequence diagram illustrating operations for detecting a PCI collision by the UE and changing the PCI in response to an instruction from the AMF according to the second embodiment.
- FIG. 20: is a sequence diagram illustrating the first example method for communicating between the UE and the NW through the relay UE according to the third embodiment.
- FIG. 21: is a sequence diagram illustrating the second example method for communicating between the UE and the NW through the relay UE according to the third embodiment.
- FIG. 22: is a sequence diagram illustrating a method for modifying the PDU session for relaying data between the relay UE and the CN node according to the third embodiment.
- FIG. 23: is a sequence diagram illustrating an example method for a remote UE to obtain the SLRB configuration between the remote UE and the relay UE from the gNB to which the relay UE is connected according to the first modification of the third embodiment.
- FIG. 24: is a sequence diagram illustrating an example method for the relay UE to establish the SLRB configuration between the remote UE and the relay UE according to the first modification of the third embodiment.
- FIG. 25: is a sequence diagram illustrating the first example method for transmitting and receiving data in the CP in the PC5 according to the fourth embodiment.
- FIG. 26: is a sequence diagram illustrating the second example method for transmitting and receiving data in the CP in the PC5 according to the fourth embodiment.
- FIG. 27: is a sequence diagram illustrating the third example method for transmitting and receiving data in the CP in the PC5 according to the fourth embodiment.
- FIG. 28: illustrates the first example dataflow in the UE-TX when transmitting data in the CP according to the fourth embodiment.
- FIG. 29: illustrates the second example dataflow in the UE-TX when transmitting data in the CP according to the fourth embodiment.
- FIG. 30: illustrates the third example dataflow in the UE-TX when transmitting data in the CP according to the fourth embodiment.
- FIG. 31: is a sequence diagram illustrating the first example method for transmitting data through the relay UE in the CP according to the first modification of the fourth embodiment.
- FIG. 32: is a sequence diagram illustrating the second example method for transmitting data through the relay UE in the CP according to the first modification of the fourth embodiment.

### DESCRIPTION OF EMBODIMENTS

### The First Embodiment

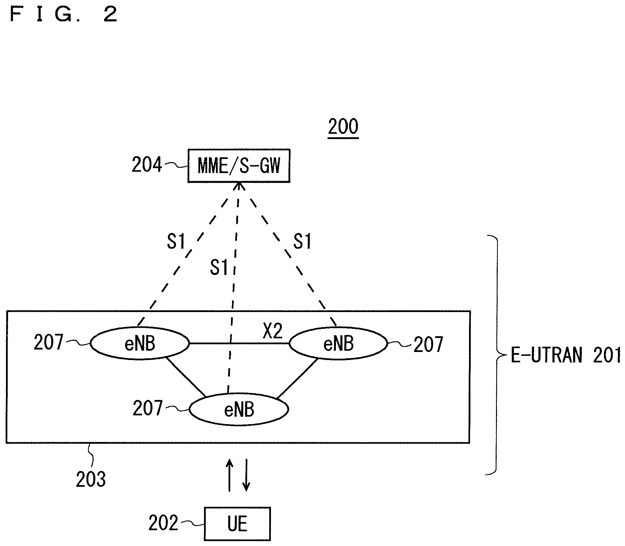

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC_IDLE and RRC_CONNECTED.

In RRC _IDLE, public land mobile network (PLMN) selection, system information (SI) broadcast, paging, cell reselection, mobility, and the like are performed. In RRC _CONNECTED, the user equipment has RRC connection and is capable of transmitting and receiving data to and from a network. In RRC _CONNECTED, for example, handover (HO) and measurement of a neighbor cell are performed.

The base stations 203 includes one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (UE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

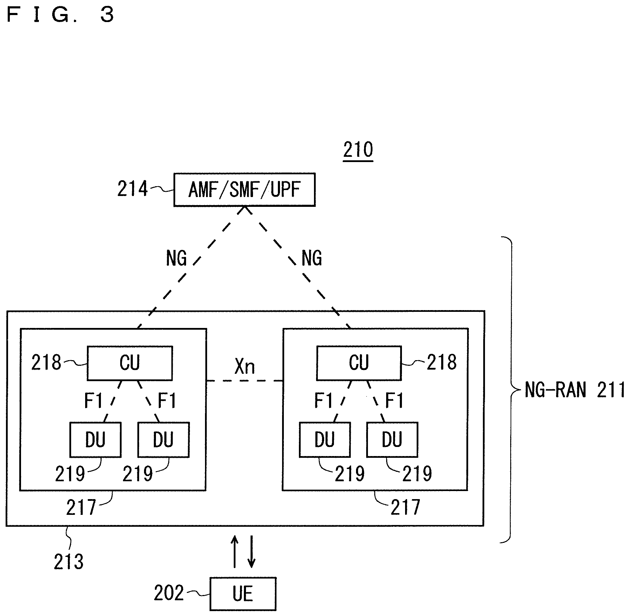

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NR base station (NG-RAN NodeB (gNB))") 213, and transmits and receives signals to and from the NR base station 213 via radio communication. Furthermore, the core network is referred to as a 5G Core (5GC).

When control protocols for the UE 202, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC_IDLE, RRC _CONNECTED, and RRC _INACTIVE.

RRC_IDLE and RRC_CONNECTED are identical to those in LTE. In RRC _INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214. The NG interface is a generic name for an N2 interface between the gNBs 217 and the AMF, an N3 interface between the gNBs 217 and the UPF, an N11 interface between the AMF and the SMF, and an N4 interface between the UPF and the SMF. A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

The 5G communication system may include the Unified Data Management (UDM) function and the Policy Control Function (PCF) described in Non-Patent Document 27 (3GPP TS23.501 V16.4.0). The UDM and/or the PCF may be included in the 5GC unit in FIG. 3.

The 5G communication system may include the Non-3GPP Interworking Function (N3IWF) described in Non-Patent Document 27 (3GPP TS23.501 V16.4.0). The N3IWF may terminate an Access Network (AN) with the UE in a non-3GPP access with the UE.

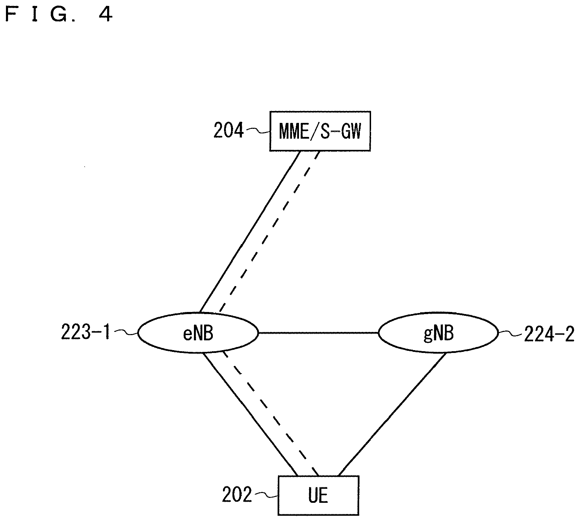

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

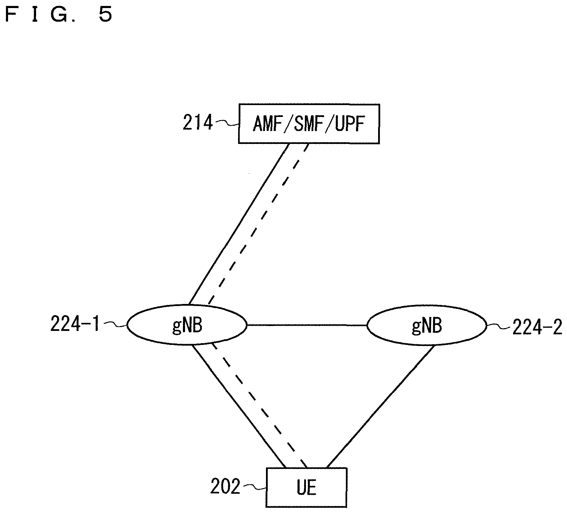

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

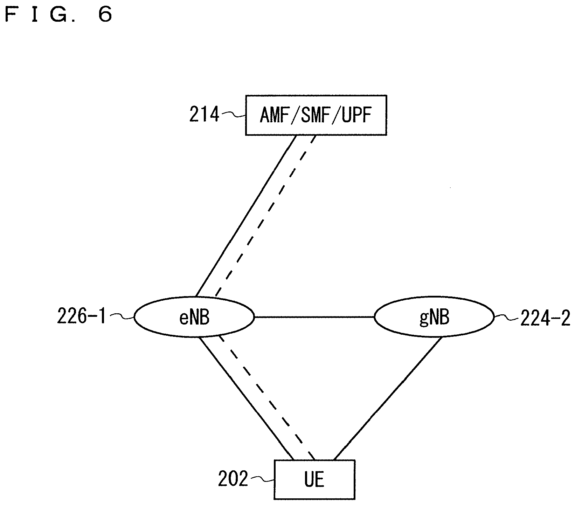

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

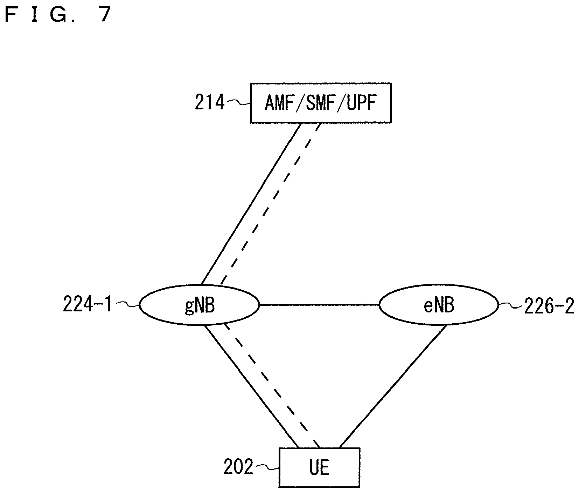

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

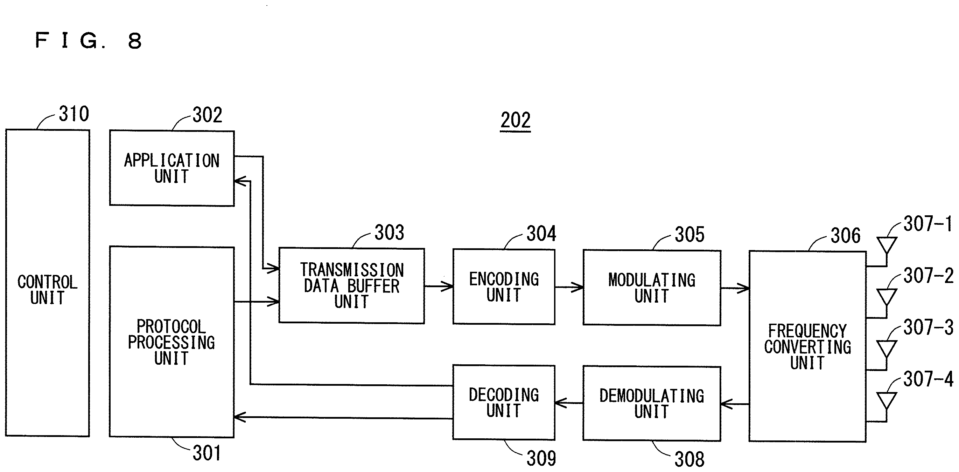

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction. There may exist the data output from the transmission data buffer unit 303 directly to a modulating unit 305 without the encoding process.

The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation. The demodulated data is passed to a decoding unit 309, and is subjected to a decoding process such as error correction.

Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

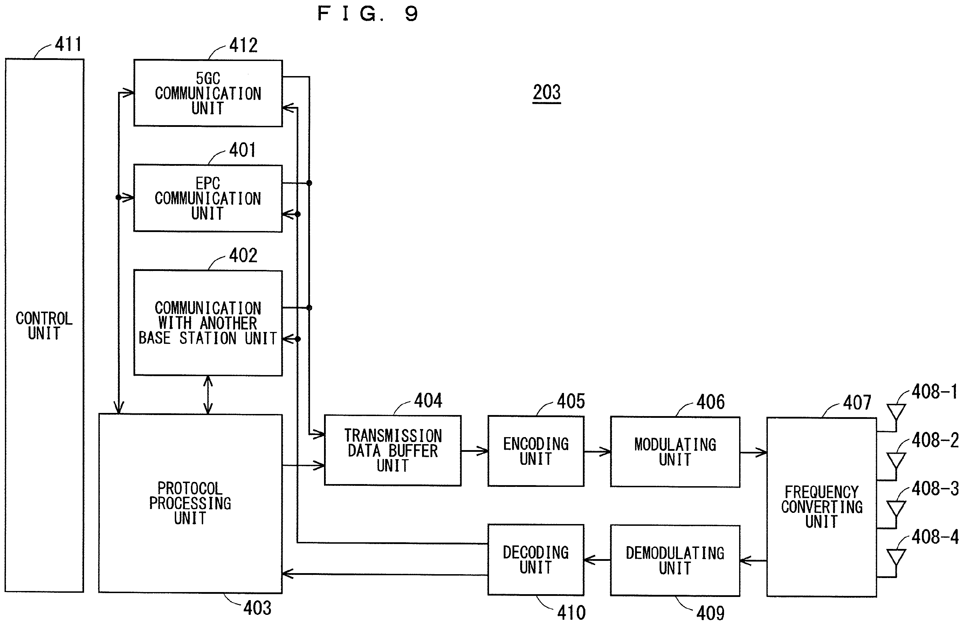

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station. The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulating unit 406 may perform precoding in the MIMO. The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction. Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401, and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203.

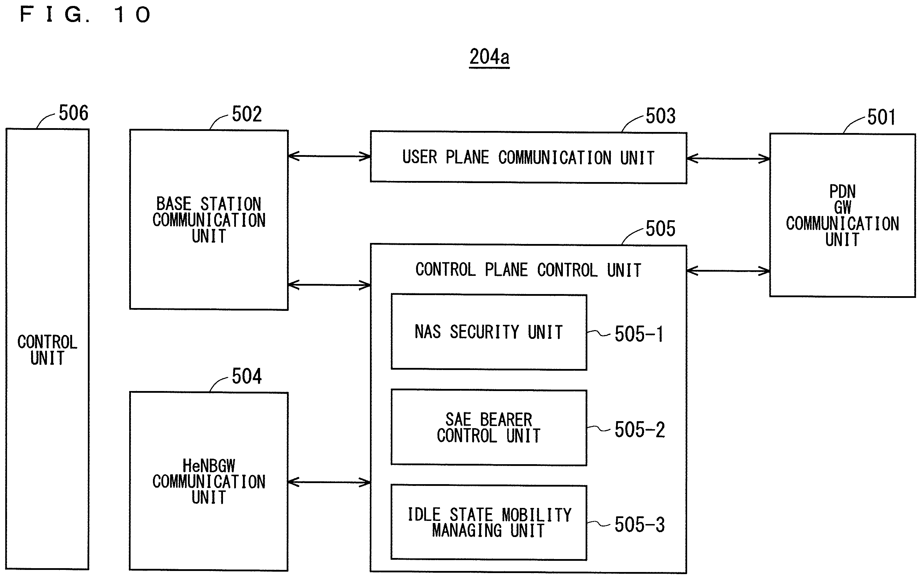

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface.

In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility managing unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer. The idle state mobility managing unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility managing unit 505-3 may manage the CSG of the eNBs 207 to be connected to the MME 204a, CSG IDs, and a whitelist.

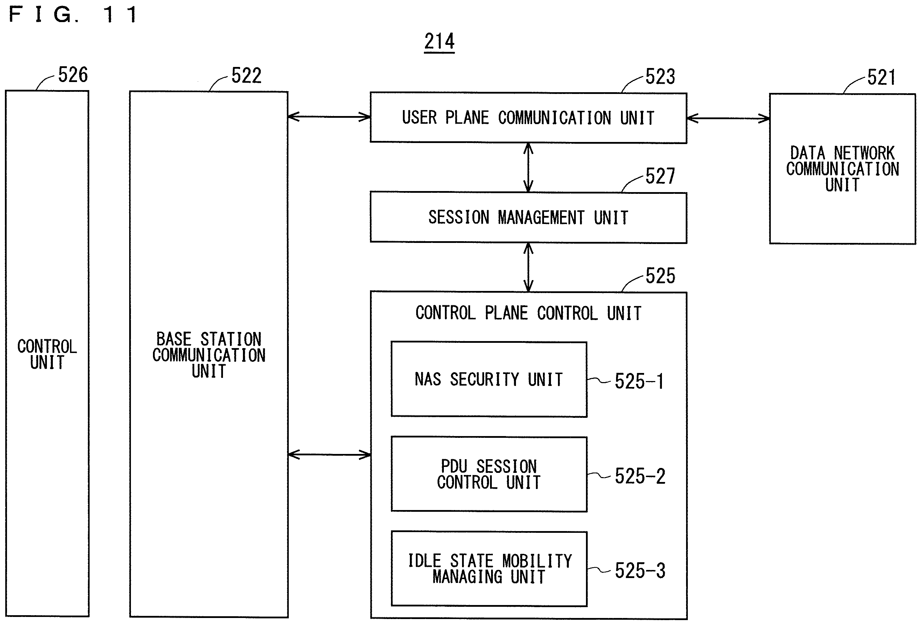

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data to a session management unit 527 through the user plane communication unit 523. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility managing unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214. The idle state mobility managing unit 525-3, for example, manages mobility of an idle state (an RRC_IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

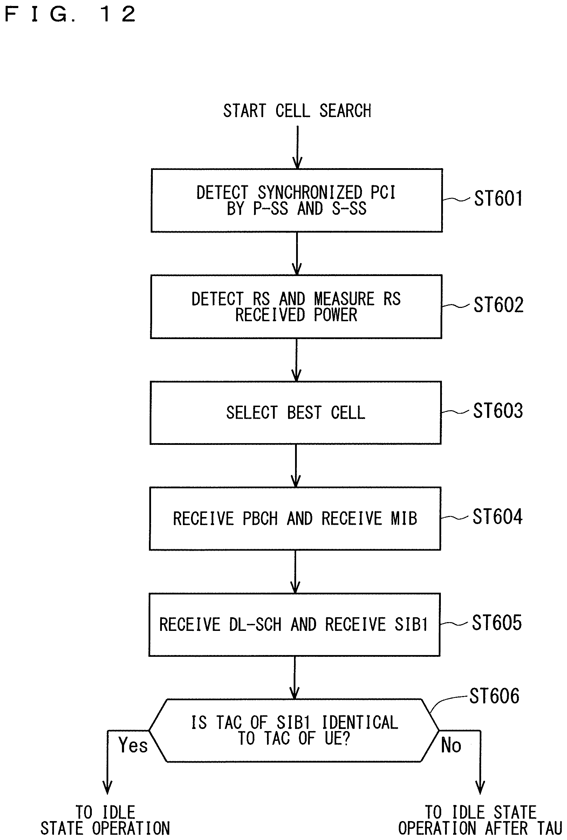

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP) for the synchronized cells. The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB 1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

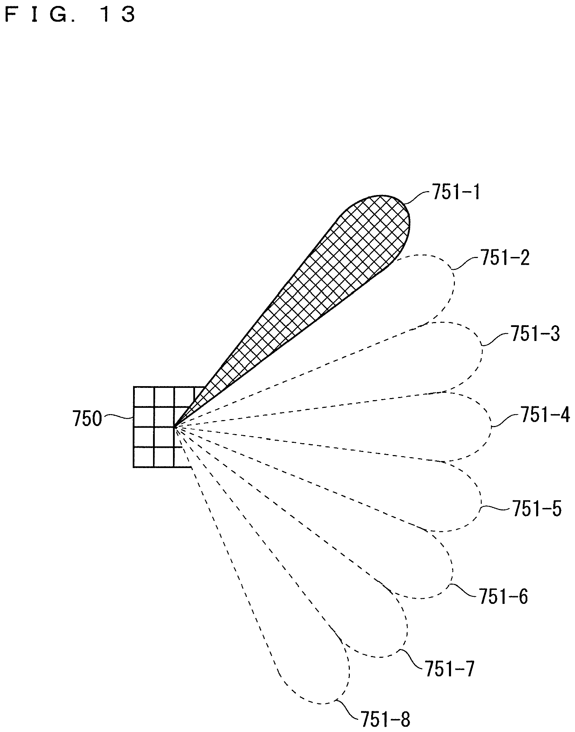

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more.

In 3GPP, the Side Link (SL) is supported for the Device-to-Device (D2D) communication and the Vehicle-to-Vehicle (V2V) communication (see Non-Patent Documents 1 and 16). The SL is defined by the PC5 interface.

The physical channels to be used for the SL (see Non-Patent Document 1) are described. A physical sidelink broadcast channel (PSBCH) carries information related to systems and synchronization, and is transmitted from the UE.

A physical sidelink discovery channel (PSDCH) carries a sidelink discovery message from the UE.

A physical sidelink control channel (PSCCH) carries control information from the UE for the sidelink communication and the V2X sidelink communication.

A physical sidelink shared channel (PSSCH) carries data from the UE for the sidelink communication and the V2X sidelink communication.

A physical sidelink feedback channel (PSFCH) carries, to the UE that has transmitted the PSSCH, the HARQ feedback in the sidelink from the UE that has received the PSSCH transmission.

The transport channels to be used for the SL (see Non-Patent Document 1) are described. A sidelink broadcast channel (SL-BCH) has a predetermined transport format, and is mapped to the PSBCH that is a physical channel.

A sidelink discovery channel (SL-DCH) has periodic broadcast transmission of a fixed size and a predetermined format. The SL-DCH supports both of the UE autonomous resource selection and the resource allocation scheduled by the eNB. The SL-DCH has collision risk in the UE autonomous resource selection. The SL-DCH has no collision when the eNB allocates dedicated resources to the UE. The SL-DCH supports the HARQ combining. However, the SL-DCH does not support the HARQ feedback. The SL-DCH is mapped to the PSDCH that is a physical channel.

A sidelink shared channel (SL-SCH) supports broadcast transmission. The SL--SCH supports both of the UE autonomous resource selection and the resource allocation scheduled by the eNB. The SL-SCH has collision risk in the UE autonomous resource selection. The SL-SCH has no collision when the eNB allocates dedicated resources to the UE. The SL-SCH supports the HARQ combining. However, the SL-SCH does not support the HARQ feedback. The SL-SCH also supports dynamic link adaptation by varying the transmission power, modulation, and coding. The SL-SCH is mapped to the PSSCH that is a physical channel.

Logical channels to be used for the SL (see Non-Patent Document 1) are described. A sidelink broadcast control channel (SBCCH) is a sidelink channel for broadcasting sidelink system information from one UE to other UEs. The SBCCH is mapped to the SL-BCH that is a transport channel.

A sidelink traffic channel (STCH) is a point-to-multipoint sidelink traffic channel for transmitting user information from one UE to other UEs. This STCH is used only by sidelink communication capable UEs and V2X sidelink communication capable UEs. The point-to-point communication between two sidelink communication capable UEs is realized with the STCH. The STCH is mapped to the SL-SCH that is a transport channel.

A sidelink control channel (SCCH) is a sidelink control channel for transmitting control information from one UE to other UEs. The SCCH is mapped to the SL-SCH that is a transport channel.

Supporting the V2X communication also in NR has been studied in 3GPP. Study of the V2X communication in NR has been pursued based on the LTE system and the LTE-A system. There are changes and additions from the LTE system and the LTE-A system in the following points.

In LTE, the SL communication relies only on broadcasts. In NR, supporting not only broadcasts but also unicasts and groupcasts has been studied as the SL communication (see Non-Patent Document 26 (TS23.287)).

Supporting, for example, the HARQ feedback (Ack/Nack) or the CSI report in the unicast communication or the groupcast communication has been studied.

Supporting the PC5-S signaling has been studied to support not only broadcasts but also unicasts and groupcasts in the SL communication (see Non-Patent Document 26 (TS23.287)). For example, the PC5-S signaling is performed for establishing the SL or a link for conducting the PC5 communication. This link is implemented by the V2X layer, and is also referred to as a Layer-2 link.

Supporting the RRC signaling in the SL communication has also been studied (see Non-Patent Document 26 (TS23.287)). The RRC signaling in the SL communication is also referred to as PC5 RRC signaling. As an example proposal, UEs performing the PC5 communication mutually notify the UE capability or the configuration of the AS layer for performing theV2X communication using the PC5 communication.

The UE may change the CAG information. The NW or the UE may initiate the change.

However, none discloses a UE-initiated procedure for changing the CAG information. Thus, the UE has a problem of failing to initiate a change in the CAG information.

A solution to the problem is disclosed.

The UE requests the AMF to change the CAG information. The UE may issue the request, for example, via the NAS signaling. NAS signaling (for example, a CAG INFORMATION CHANGE REQUEST) to be used for requesting the change in the CAG information may be newly provided. Examples of the change in the CAG information may include adding a CAG to an Allowed CAG list disclosed in Non-Patent Document 27 (TS23.501), deleting a CAG from the Allowed CAG list, modifying (i.e., deleting and adding) the Allowed CAG list, and changing CAG-only information (see Non-Patent Document 27 (TS23.501)) indicating whether the UE can be connected to the NW only through a CAG cell.

The signaling may include information on the CAG information after the change. The information may be, for example, information on a difference between before and after the change. This can, for example, reduce the size of the signaling.

The AMF determines whether the CAG information of the UE can be changed, using the information from the UE. When determining that the CAG information of the UE can be changed, the AMF may instruct the UE to change the CAG information. The instruction may include the CAG information after the change.

The AMF may determine the CAG information after the change. For example, the AMF may make the CAG information after the change which has been determined by its own AMF different from the CAG information included in the request from the UE. Consequently, for example, exclusion of a CAG cell on which many UEs camp from an Allowed CAG cell list enables efficient operations in a network.

When the determined CAG information is different from the CAG information requested from the UE, the AMF may include information on the difference in the instruction and notify the information. The information may include, for example, information on a part or the whole of the CAG information requested from the UE (information that is not reflected on the CAG information determined by the AMF and is included in the CAG information requested from the UE), or information on a part or the whole of the CAG information determined by its own AMF. This enables, for example, the UE to promptly understand a disapproved request from among requests of its own UE.

When the determined CAG information is different from the CAG information requested from the UE, the AMF may include information on a cause of the difference in the instruction and notify the information. The information may be, for example, the fact that no more UEs can be added to a CAG cell to which the UE requests its addition, or the fact that the CAG cell to which the UE requests an addition bars access to the UE. This enables, for example, the UE to promptly issue a new request for changing the CAG information.

The AMF need not include the CAG information after the change in the instruction. For example, when the CAG information determined by its own AMF is identical to that included in the request from the UE, the AMF need not include the CAG information after the change in the instruction. This can, for example, reduce the size of the NAS signaling.

The AMF may issue the instruction using the UE configuration update command disclosed in Non-Patent Document 25 (TS23.502), or using another NAS signaling. In response to the instruction, the UE may change the CAG information of its own UE. The UE may notify the AMF of completion of the change in the CAG information. The UE may give the notification to the AMF, for example, using the UE Configuration Update Complete disclosed in Non-Patent Document 25 (TS23.502), or using another NAS signaling. The AMF may notify the base station of information on a change in the CAG information of the UE. The base station may notify the UE of the information. The UE may change the CAG information, using the information.

The AMF may reject the request for changing the CAG information from the UE. For example, when no more UEs can be added to a CAG cell to which the UE requests its addition, the AMF may reject the request. As another example, when the CAG cell to which the UE requests its addition bars access to the UE, the AMF may reject the request from the UE. The AMF may notify the UE of the rejection to the request. The notification may include information on a cause of the rejection. The information may be, for example, the fact that no more UEs can be added to a CAG cell to which the UE requests its addition, or the fact that the CAG cell to which the UE requests its addition bars access to the UE. This enables, for example, the UE to promptly issue a new request for changing the CAG information.

New NAS signaling may be provided. Examples of the new NAS signaling to be provided include CAG information change request reject NAS signaling and UE configuration update request reject NAS signaling. The AMF may notify the UE of the rejection via the new NAS signaling. This enables, for example, the UE to promptly understand the rejection to the request for changing the CAG information.

The UE may be handed over. For example, when the cell to which the UE is connected does not adapt to the CAG information, the UE may be handed over. The AMF may instruct the gNB to hand over the UE to a cell that adapts to the CAG information after the change. The gNB may hand over the UE, using the information. As another example, the gNB may hand over the UE, using the CAG information after the change which has been notified from the AMF. This enables, for example, the UE to promptly start the connection to the cell that adapts to the CAG information after the change.

The AMF may request a CN node to register the UE, using the cell that adapts to the CAG information after the change. This enables, for example, the UE to promptly start the communication, using the S-NSSAI that the cell that adapts to the CAG information after the change supports.

As another example, the UE may reselect a cell. For example, when the cell to which the UE is connected does not adapt to the CAG information, the UE may reselect a cell. This enables, for example, the UE to promptly start the connection to the cell that adapts to the CAG information after the change.

The UE may perform registration using the cell that adapts to the CAG information after the change. In the registration, a method for the UE to perform re-registration in a NW, which is to be disclosed below, may be used. This enables, for example, the UE to promptly start the communication, using the S-NSSAI that the cell that adapts to the CAG information after the change supports.

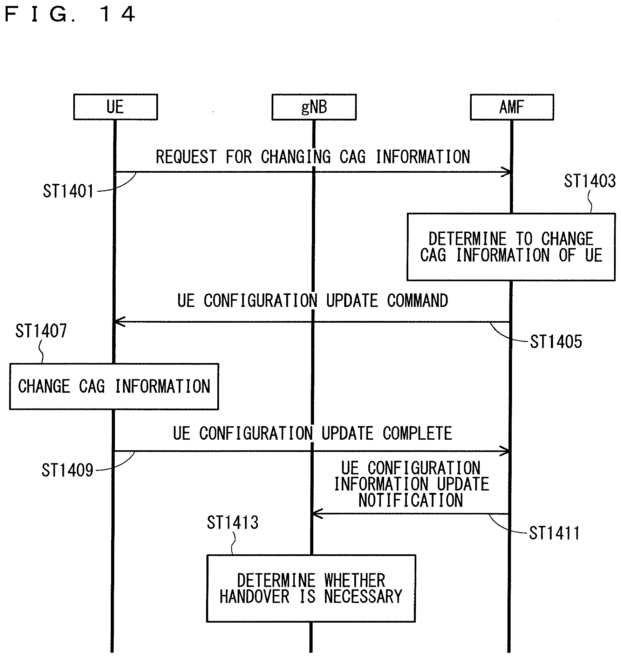

FIG. 14 is a sequence diagram illustrating operations for changing the CAG information in response to a request from the UE (i.e., initiated by the UE). FIG. 14 illustrates an example when the gNB does not hand over the UE.

In Step ST1401 of FIG. 14, the UE requests the AMF to change the CAG information. The UE may issue the request in Step ST1401, for example, via the NAS signaling. The request in Step ST1401 may include information on the CAG information to which the UE wishes to make a change. In Step ST1403, the AMF determines whether the CAG information of the UE can be changed, in response to the request received in Step ST1401. In the example of FIG. 14, the AMF determines that the CAG information of the UE can be changed.

In Step ST1405 of FIG. 14, the AMF instructs the UE to change the CAG information. The AMF may perform Step ST1405 using the UE configuration update command disclosed in Non-Patent Document 25 (TS23.502), or using another NAS signaling. The instruction in Step ST1405 may include a value on the CAG information after the change. The information included in the instruction in Step ST1405 may be identical to or different from the information included in the request in Step ST1401.

In Step ST1407, the UE changes the CAG information. In Step ST1409, the UE notifies the AMF of completion of the change in the CAG information. The UE may give the notification, for example, via the UE configuration update complete signaling disclosed in Non-Patent Document 25 (TS23.502), or via another NAS signaling. In Step ST1411, the AMF notifies the gNB of the change in the CAG information of the UE. The notification may include the information on the CAG information after the change. In Step ST1413, the gNB determines whether the UE needs to be handed over. The gNB may make the determination using information included in the notification in Step ST1411.

Although FIG. 14 illustrates that the gNB determines whether the UE can be handed over, the UE may determine whether to reselect a cell. This can, for example, reduce the amount of processing in the gNB.

Another solution is disclosed. The UE may request the AMF to update the UE configuration. This request may include a request for changing the CAG information. The UE may request the AMF to update the UE configuration, for example, via the NAS signaling. NAS signaling (for example, a CONFIGURATION UPDATE REQUEST) to be used for requesting the update of the UE configuration may be newly provided. This enables, for example, the UE to update the UE configuration as well as the CAG information. Consequently, the amount of signaling between the UE and the AMF can be reduced.

Another solution is disclosed. The UE may request the AMF to modify details of registration. This request may include a request for changing the CAG information. This request may also include a request for updating the UE configuration. The UE may request the AMF to modify the details of registration, for example, via the NAS signaling. NAS signaling (for example, a REGISTRATION MODIFICATION REQUEST) to be used for requesting the modification of the details of registration may be newly provided. This enables, for example, the UE to modify the details of registration as well as to update the CAG information. Consequently, the amount of signaling between the UE and the AMF can be reduced.

Another solution is disclosed. The UE re-registers in a NW.

The UE may autonomously deregister with the AMF. This can, for example, reduce the amount of signaling between the UE and the AMF. As another example, the UE may request the AMF to deregister the UE from the NW. The UE may issue the request, for example, via the NAS signaling. For example, the DEREGISTRATION REQUEST disclosed in Non-Patent Document 25 (TS23.502 V16.4.0) may be used as the NAS signaling for issuing the request. This enables, for example, prompt deregistration.

The UE may request the AMF to register the UE. The registration request may include information on the CAG information after the change.

The registration request may include information indicating that the registration is associated with the change in the CAG information. The AMF may register the UE in the NW, using the information. This enables, for example, the AMF to promptly register the UE.

When changing the CAG information, the UE may transition to the RRC_IDLE state. The UE may autonomously transition between states when changing the CAG information. The base station may instruct the UE to transition between states. The UE may be connected to the base station, using the CAG information after the change. This can, for example, avoid the complexity in processing of the communication system.

When changing the CAG information, the UE may transition to the CM_IDLE state. The UE may re-establish the NAS connection with the AMF, using the CAG information after the change. This can, for example, avoid the complexity in processing of the communication system.

When changing the CAG information, the UE may reselect a cell using the CAG information after changing the CAG. For example, when the CAG information of the UE is changed from a non-CAG-only connection state to a CAG-only connection, the UE may reselect a cell only from CAG cells. As another example, when the Allowed CAG list of the UE is modified, the UE may reselect a cell only from cells included in the modified Allowed CAG list. This enables, for example, the UE after changing the CAG information to promptly perform a process of being connected to a NW.

As another example of reselecting a cell, the UE may reselect a cell using the CAG information before changing the CAG. For example, when the CAG information of the UE is changed from the non-CAG-only connection state to the CAG-only connection, the UE may reselect a cell from CAG cells and/or PLMN cells. As another example, when the Allowed CAG list of the UE is modified, the UE may reselect a cell from cells included in the Allowed CAG list before modification, or reselect a cell from cells included in the CAG list after or before modification. This enables, for example, the UE after changing the CAG information to promptly perform a process of being connected to a NW.

Access control may be verified when the CAG information is changed. The access control may be reliably verified, for example, when the CAG information has been changed. Alternatively, the access control may be verified, for example, when there is a change in the access control for the UE as a result of changing the CAG information. This enables, for example, appropriate access control based on the CAG information after the change in the NW.

As another example of changing the CAG information, the access control need not be verified. The access control need not be reliably verified, for example, when the CAG information has been changed. Alternatively, the access control need not be verified, for example, when there is no change in the access control for the UE as a result of changing the CAG information. This can, for example, expedite the procedure for changing the CAG.

When changing the CAG information, the UE may transition to the RM-DEREGISTERED state. The UE may re-register in the NW, using the CAG information after the change. This can, for example, avoid the complexity in processing of the communication system.

As another example of changing the CAG information, the UE may maintain the RM-REGISTERED state. The UE and each device in the NW may change the CAG information of the UE while maintaining the registration state of the UE. This can, for example, expedite the procedure for changing the CAG.

As another example of changing the CAG information, the UE may transition to the RRC _INACTIVE state. The UE may reselect a cell, using the CAG information after the change. This can, for example, avoid the complexity in processing of the communication system.

When changing the CAG information, the UE may maintain the CM _CONNECTED state. This enables, for example, the UE to promptly resume the communication after changing the CAG information.

As another example of changing the CAG information, the UE may transition to the RRC_CONNECTED state. Using the CAG information after the change, the UE may continue the communication with the initial cell or may be handed over to another cell. The base station may determine a handover target cell of the UE, using the CAG information after the change. This enables, for example, continuance of the communication between the UE and the NW before and after changing the CAG information.

The method disclosed in the first embodiment may be applied to a change in the CAG. The change in the CAG may be a change in a connection destination of the CAG. For example, the UE may request the gNB to change a connection destination of the CAG. This request may include information on the connection destination of the CAG after the change. As another example in changing the CAG, the UE may transition to the RRC_IDLE state or the RRC _INACTIVE state, or maintain the RRC_CONNECTED state. The UE may reselect a cell. The base station may determine to hand over the UE.

The method disclosed in the first embodiment may be applied to a standalone NPN (SNPN). For example, the UE may initiate a change in an SNPN access mode of the UE. The UE may request the AMF to change the SNPN access mode. The UE may issue the request, for example, via the NAS signaling.

The method disclosed in the first embodiment may be applied to a change in the SNPN. For example, the UE may transition to the RRC_IDLE state or the RRC_INACTIVE state, or maintain the RRC _CONNECTED state. The UE may reselect a cell. The base station may determine to hand over the UE.

The first embodiment enables the UE to promptly change the CAG information.

### The Second Embodiment

A high-altitude UE enters a coverage of a plurality of cells. Since frequencies in NR are higher than those in LTE, a cell radius in NR is smaller than that in LTE. Thus, the number of cells that the high-altitude UE can receive in NR is larger than that in LTE.

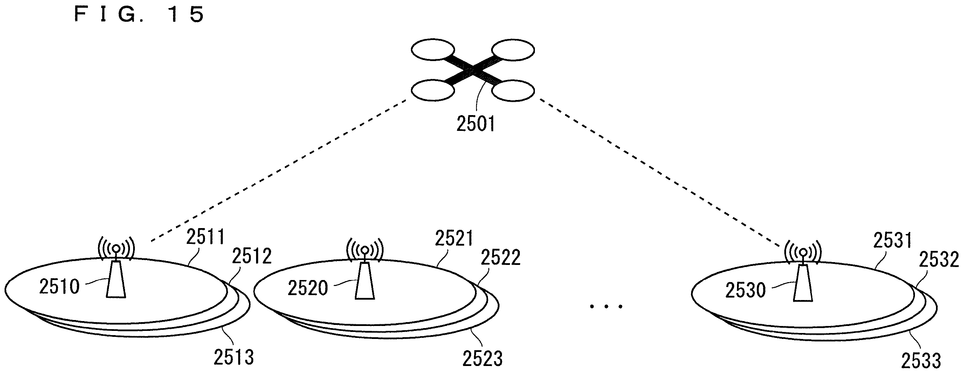

FIG. 15 is a schematic diagram illustrating cells that the high-altitude UE can receive. In FIG. 15, a high-altitude UE 2501 can receive not only cells 2521, 2522, and 2523 of a base station 2520, but also cells 2511, 2512, and 2513 of a base station 2510 adjacent to the base station 2520 and cells 2531, 2532, and 2533 of a base station 2530 distant from the base station 2520.

The following problem occurs in the aforementioned case. Specifically, there is a possibility that the number of cells that the high altitude UE can receive exceeds the number of allocable PCIs and that this UE detects a plurality of cells with the same PCI (may be referred to as a PCI collision). Consequently, the UE has a possibility of falsely recognizing broadcast information from one cell as broadcast information from another cell. This may lead to a malfunction in the communication system.

A method for solving the problem is disclosed.

The PCIs of the cells are changed. The PCIs of the cells may be negotiated.

The UE may detect a PCI collision. The PCI collision detected by the UE may be a PCI collision of a serving cell of the UE (i.e., a PCI collision between the serving cell and another cell) or a PCI collision between non-serving cells.

The UE may detect a PCI collision using the PCI, using global cell IDs included in the SIB 1 (see Non-Patent Document 30 (TS38.331)), or using the SS block and/or the timing of system information. For example, the UE may determine the occurrence of a PCI collision when detecting different global cell IDs in the system information from the cells with the same PCI. As another example, when the timing with which the system information has been received is different from the timing of the system information included in the SS block and/or the system information, the UE may determine the occurrence of a PCI collision. This can, for example, reduce the amount of processing in detecting the PCI.

The UE may notify the serving cell of information on the PCI collision. The UE may give the notification, for example, via the RRC signaling. The RRC signaling may be RRC signaling for reporting measurement results. RRC signaling for notifying a PCI collision may be newly provided. The serving cell may change, using the information, the PCI of its own serving cell or the timing to transmit the SS block of its own serving cell.

The following (1) to (7) are disclosed as information included in the notification from the UE to the serving cell.
(1) Information on a colliding PCI
(2) Information on a number of a free PCI
(3) Information on a colliding cell
(4) Information on cells that its own UE can receive
(5) Information on cells with the received power higher than a predetermined threshold
(6) Information on the altitude of its own UE
(7) Combinations of (1) to (6) above

The information (1) may be, for example, a value(s) of the colliding PCI(s), or a list of a plurality of values. The value(s) of the colliding PCI(s) may be a single value or multiple values. This enables, for example, a serving base station to recognize that the PCI of a cell of its own base station has collided.

The information (2) may be, for example, a value of the PCI of a free cell, or a list of a plurality of values. A cell of the serving base station may change the PCI of its own cell, using the information (2). This enables, for example, the cell of the serving base station to avoid a PCI collision with another cell.

The information (3) may be, for example, information on a global ID of the colliding cell. This enables, for example, the UE and/or the cell of the serving base station to uniquely identify the colliding cell.

The information (4) may be, for example, information on cells that the UE has received through a cell search. The information on the cells may be PCIs of the cells, information on received intensities of the cells, or information on global IDs of the cells, or include some of these pieces of information. The serving base station may, for example, change the PCI of its own cell, using the information (4). This enables, for example, the cell of the serving base station to avoid a PCI collision.

The information (5) may be, for example, information similar to the information (4). The predetermined threshold may be determined in a standard, or determined and notified to the UE by a NW device. The NW device may be the base station or the AMF. The serving base station may, for example, change the PCI of its own cell, using the information (5). This enables, for example, the cell of the serving base station to avoid a PCI collision.

The information (6) may be information on the altitude of the UE per se or information indicating whether the altitude is higher than or equal to a predetermined altitude or lower than the predetermined altitude. The serving base station may change the PCI of the cell of its own base station or change the transmission power, using the information (6). This can, for example, avoid a PCI collision in the cell of the serving base station even when the altitude of the UE is further increased.

The serving cell may broadcast or dedicatedly notify, to the UEs being served thereby, information indicating that the PCI has been changed. The information may include information on a change in the timing of the SS block. The UEs being served thereby may re-establish the downlink synchronization with the serving cell, using the information.

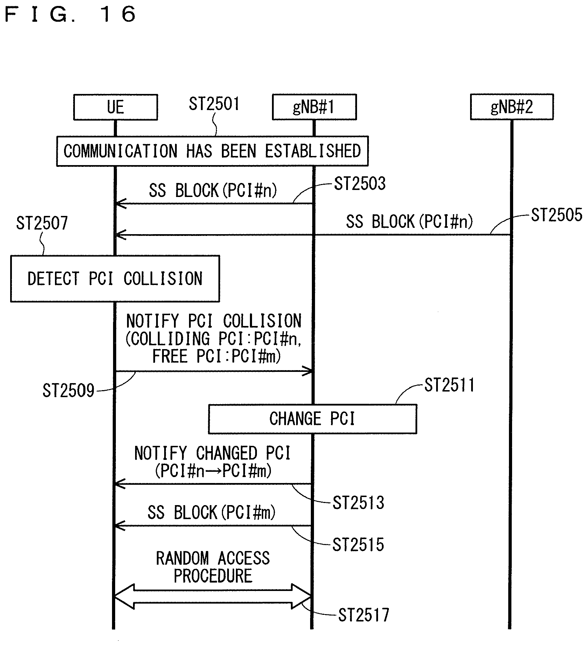

FIG. 16 is a sequence diagram illustrating operations for detecting a PCI collision by the UE and changing a PCI of a serving cell. In FIG. 16, the gNB #1 is a base station of the serving cell of the UE, and a cell of the gNB #2 has the same PCI as that of the serving cell of the gNB #1. FIG. 16 exemplifies that the gNB #1 changes the PCI.

In Step ST2501 of FIG. 16, the communication between the UE and the gNB #1 has been established. In Step ST2503, the gNB #1 transmits the SS block to the UE. The gNB #1 includes, in the SS block, information indicating that a number of the PCI of its own cell is n, and transmits the information. Through Step ST2503, the UE obtains information on the PCI number of the cell of the gNB #1. In Step ST2505, the gNB #2 transmits the SS block to the UE. The gNB #2 includes, in the SS block, information indicating that a number of the PCI of its own cell is n, and transmits the information. Through Step ST2505, the UE obtains information on the PCI number of the cell of the gNB #2.

In Step ST2507 of FIG. 16, the UE detects that the gNB #1 and the gNB #2 have the same PCI, that is, the PCIs collide. In Step ST2509, the UE notifies the gNB #1 of information on the PCI collision. The UE may give the notification, for example, via the RRC signaling. The UE may include, in the information to be transmitted in Step ST2509, information on a number of the colliding PCI, information on a number of the free PCI, information on the colliding cell, or some of these pieces of information. The information on the colliding cell may be, for example, a global cell ID of the colliding cell.

The notification in Step ST2509 may include information on the PCIs of the cells that its own UE can receive, or information on the PCIs of the cells with the received power higher than a predetermined threshold. The notification in Step ST2509 may include information on a global cell ID of the cell. The notification in Step ST2509 may include information on the altitude of its own UE. The base stations may exchange the information included in Step ST2509. In Step ST2511, the gNB #1 changes the PCI. The gNB #1 may change the timing to transmit the SS block. The gNB #1 may change the PCI, using the information in Step ST2509.

In Step ST2513 of FIG. 16, the gNB #1 notifies the UE of information on the changed PCI. The notification may include information on the changed timing to transmit the SS block. In the example of FIG. 16, the gNB #1 notifies the UE that the PCI has been changed from n to m. Through Step ST2513, the UE may obtain information on the changed PCI.

In Step ST2515 of FIG. 16, the gNB #1 transmits the SS block using the changed PCI number m. Through Step ST2515, the UE establishes the downlink synchronization with the gNB #1. In Step ST2517, the UE performs a random access procedure with the gNB #1. Thus, the UE establishes the uplink synchronization with the gNB #1.

The base station whose PCI collides with that of the serving cell may change the PCI. The UE may notify the serving cell of information on the PCI collision. The information may include information on a cell colliding with the serving cell (may be referred to as a colliding cell), or the information (1) to (7) disclosed as the information included in the notification from the UE to the serving cell. The serving cell may request the colliding cell to change the PCI. The colliding cell may determine whether the PCI can be changed, using the information. The colliding cell may notify the serving cell of whether the PCI can be changed. When determining that the PCI can be changed, the colliding cell may change the PCI of its own cell or change the timing to transmit the SS block of its own cell. The colliding cell may broadcast or dedicatedly notify, to the UEs being served by its own cell, information indicating that the PCI has been changed. The information may include information on a change in the timing of the SS block. The UEs being served thereby may re-establish the downlink synchronization with the colliding cell, using the information.

The request may include information on UEs camping on the serving cell. The request may include, for example, information on the number of UEs camping on the serving cell. The colliding cell may determine whether the PCI can be changed, using the information. For example, the colliding cell may change the PCI of its own cell when the number of UEs camping on the serving cell is larger than that in its own cell. This can, for example, reduce the number of UEs requiring resynchronization due to the change in the PCI of the cell.

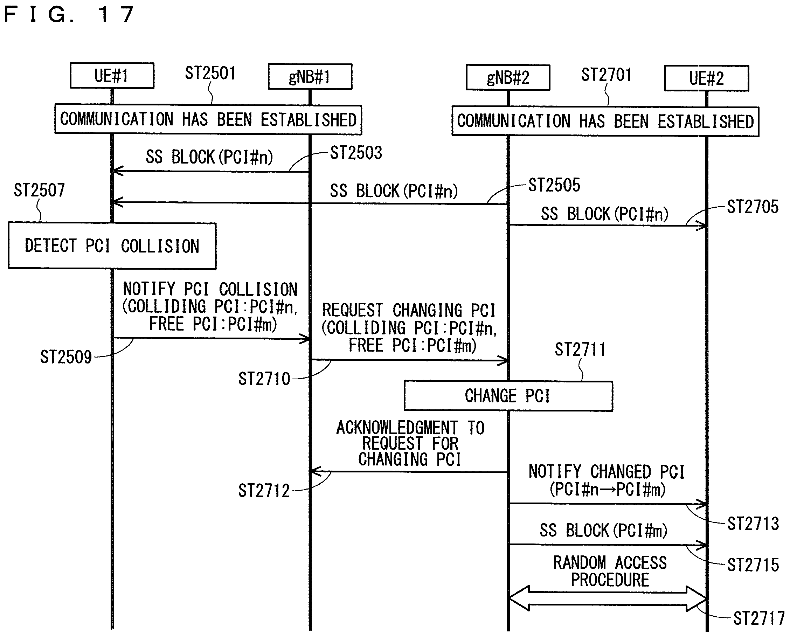

FIG. 17 is a sequence diagram illustrating operations for detecting a PCI collision by the UE and changing the PCI of the colliding cell. In FIG. 17, the gNB #1 is a base station of the serving cell of the UE #1, and the cell of the gNB #2 has the same PCI as that of the serving cell of the gNB #1. In FIG. 17, the UE #1 is a UE being served by the cell of the gNB #1, and the UE #2 is a UE being served by the cell of the gNB #2. FIG. 17 exemplifies that the UE #1 detects a PCI collision and the gNB #2 changes the PCI. In FIG. 17, the same step numbers are applied to the processes identical to those in FIG.16, and the common description thereof is omitted.

Step ST2501 in FIG. 17 is identical to that in FIG. 16. In Step ST2701, the communication between the UE #2 and the gNB #2 has been established.

Steps ST2503 and ST2505 in FIG. 17 are identical to those in FIG. 16. In Step ST2705, the gNB #2 transmits the SS block to the UE #2. The gNB #2 includes, in the SS block, information indicating that the number of the PCI of its own cell is n, and transmits the information.

Steps ST2507 and ST2509 in FIG. 17 are identical to those in FIG. 16. In Step ST2710, the gNB #1 requests the gNB #2 to change the PCI. The gNB #1 may include information similar to that in Step ST2509 in the request for changing the PCI in Step ST2710. For example, the gNB #1 may include, in the request for changing the PCI in Step ST2710, information on the number of the colliding PCI, information on the number of the free PCI, information on the colliding cell, or some of these pieces of information. The information on the colliding cell may be, for example, a global cell ID of the colliding cell. In Step ST2711, the gNB #2 changes the PCI. The gNB #2 may change the PCI, similarly to Step ST2511 in FIG. 16.

In Step ST2712 of FIG. 17, the gNB #2 notifies the gNB #1 of a response to the request for changing the PCI. In the example of FIG. 17, the response may be an acknowledgment. Through this response in Step ST2712, the gNB #1 may recognize that the gNB #2 has changed the PCI, or need not change the PCI of the cell of its own base station.

In Steps ST2713, ST2715, and ST2717 of FIG. 17, the gNB #2 and the UE #2 perform processes identical to those in Steps ST2513, ST2515, and ST2517 in FIG. 16, respectively.

Both of the processes may be combined. For example, the cell that changes the PCI may change between the serving cell and the colliding cell. The change in the PCI may be negotiated between the serving cell and the colliding cell. The serving cell may request the colliding cell to change the PCI. The request may include information similar to the aforementioned information. The colliding cell may determine whether the PCI can be changed, using the information. The colliding cell may notify the serving cell of whether the PCI can be changed. When determining that the PCI can be changed, the colliding cell may change the PCI of its own cell or change the timing to transmit the SS block of its own cell. When the colliding cell determines that the PCI cannot be changed, the serving cell may change the PCI or change the timing to transmit the SS block.

The colliding cell may transmit, to the serving cell, a response to the request. The response may be an acknowledgment or a response indicating rejection. The response may include information on a cause. For example, the colliding cell may include information on a cause of rejection in a response indicating the rejection. Examples of the cause of rejection may include the absence of a free PCI, the fact that the communication with a high priority is being continued, the fact that the number of UEs camping on the colliding cell exceeds the number of UEs camping on the serving cell, and other causes. The serving cell may change the PCI of its own cell or perform other necessary processes, using the information. This enables, for example, the serving cell to perform an appropriate process according to a state in the communication system.

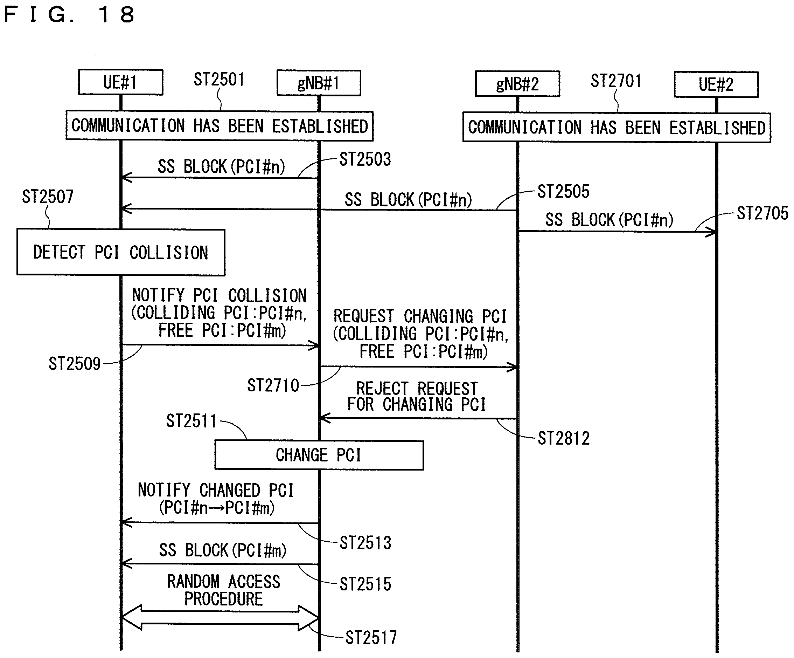

FIG. 18 is a sequence diagram illustrating operations for detecting a PCI collision by the UE and changing the PCI of the serving cell. In FIG. 18, the gNB #1 is a base station of the serving cell of the UE, and a cell of the gNB #2 has the same PCI as that of the serving cell of the gNB #1. In FIG. 18, the UE #1 is a UE being served by the cell of the gNB #1, and the UE #2 is a UE being served by the cell of the gNB #2. FIG. 18 exemplifies that the gNB #1 changes the PCI as a result of the negotiation between the gNB #1 and the gNB #2. In FIG. 18, the same step numbers are applied to the processes identical to those in FIGS. 16 and 17, and the common description thereof is omitted.

Steps ST2501 to ST2710 in FIG. 18 are identical to those in FIG. 17.

In Step ST2812 of FIG. 18, the gNB #2 determines to reject the request for changing the PCI in ST2710, and notifies the gNB #1 of the rejection to the request for changing the PCI. The notification may include information on the cause of rejecting the change in the PCI. The gNB #1 determines to change the PCI of its own cell, using the response in Step ST2812.

Steps ST2511 to ST2517 in FIG. 18 are identical to those in FIG. 16.

The PCI may be changed through the AMF. For example, the UE may notify the serving cell of information on a PCI collision. The serving cell may notify the AMF of the information. The UE may give the notification via the RRC signaling. As another example, the UE may notify the information via the NAS signaling. The AMF may instruct the serving cell or the colliding cell to change the PCI, using the information. The cell instructed by the AMF to change the PCI may instruct the cells being served thereby to change the PCI.

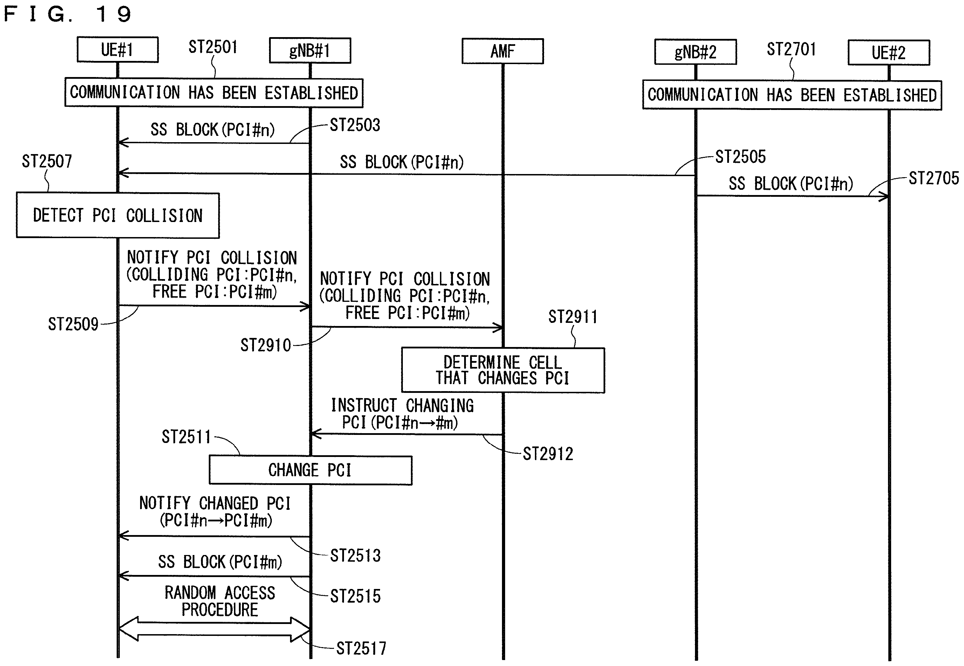

FIG. 19 is a sequence diagram illustrating operations for detecting a PCI collision by the UE and changing the PCI of the serving cell. In FIG. 19, the gNB #1 is a base station of the serving cell of the UE, and a cell of the gNB #2 has the same PCI as that of the serving cell of the gNB #1. In FIG. 19, the UE #1 is a UE being served by the cell of the gNB #1, and the UE #2 is a UE being served by the cell of the gNB #2. FIG. 19 exemplifies that the AMF determines the cell that changes the PCI to be the gNB #1 and the gNB #1 changes the PCI. In FIG. 19, the same step numbers are applied to the processes identical to those in FIGS. 16 to 18, and the common description thereof is omitted.

Steps ST2501 to ST2509 in FIG. 19 are identical to those in FIG. 17.

In Step ST2910 of FIG. 19, the gNB #1 notifies the AMF of information on a PCI collision. The gNB #1 may give the notification in Step ST2910 using information included in Step ST2509. In Step ST2911, the AMF determines a cell that changes the PCI. In the example of FIG. 19, the AMF determines to change the PCI of the cell of the gNB #1. In Step ST2912, the AMF instructs the gNB #1 to change the PCI. The instruction for changing the PCI in Step ST2912 may include information on a cell whose PCI is to be changed (e.g., a PCI or a global cell ID), information on the PCI before the change, information on the PCI after the change, or some of these pieces of information.

Steps ST2511 to ST2517 in FIG. 19 are identical to those in FIG. 16.

Although the UE notifies the gNB #1 of information on the PCI collision and the gNB #1 notifies the AMF of the information in FIG. 19, the UE may directly notify the AMF of the information. For example, the UE may notify the information via the NAS signaling. This can, for example, reduce the amount of processing the information in the gNB #1.

Another solution is disclosed. A cell terminates transmission.

The serving cell may terminate transmission. The UE may notify the serving cell of information on a PCI collision. The serving cell may determine to terminate transmission in its own cell, using the information. The serving cell may instruct the UEs being served by its own cell of the handover to another cell. The handover may be handover to another base station or handover to another cell in its own base station.

In response to the instruction, the UEs being served by the serving cell may be handed over to another cell. The serving cell may terminate transmission in its own cell after the completion of the handover of the UEs being served thereby. The serving cell may terminate transmission in its own cell, for example, after receiving the RRC reconfiguration signaling for notifying the completion of the handover from the UEs being served thereby.

As another example of terminating transmission in the serving cell, the serving cell may terminate transmission to only a part of the UEs. Examples of the part of the UEs may include the UE that has notified a PCI collision, a UE camping on the same beam as that of the UE, and the high-altitude UE. The serving cell may instruct only the part of the UEs of the handover. This can, for example, reduce the number of UEs to be handed over. Consequently, the amount of signaling between base stations and between the UE and a base station can be reduced.

As another example of terminating transmission in a cell, the colliding cell may terminate the transmission. The UE may notify the serving cell of information on a PCI collision. The serving cell may request the colliding cell to terminate transmission in the cell. The request may include information on the PCI collision. The colliding cell may instruct the UEs being served by its own cell of the handover to another cell, using the information.

The handover may be handover to another base station or handover to another cell in its own base station. In response to the instruction, the UEs being served by the colliding cell may be handed over to another cell. The colliding cell may terminate transmission in its own cell after the completion of the handover of the UEs being served thereby. The colliding cell may terminate transmission in its own cell, for example, after receiving the RRC reconfiguration signaling for notifying the completion of the handover from the UEs being served thereby.

As another example of terminating transmission in the colliding cell, the colliding cell may terminate transmission to only a part of the UEs. Examples of the part of the UEs may include a UE camping on the same beam as that of the UE that has notified a PCI collision, and the high-altitude UE. The colliding cell may instruct only the part of the UEs of the handover. This can, for example, reduce the number of UEs to be handed over. Consequently, the amount of signaling between base stations and between the UE and a base station can be reduced.

As another example of terminating transmission in a cell, the termination may be negotiated between the serving cell and the colliding cell. The negotiation may be performed similarly to the negotiation on a change in the PCI between the serving cell and the colliding cell, which is disclosed in the second embodiment. This can, for example, flexibly control a cell according to a state in the communication system. This can also, for example, avoid the complexity in the communication system.

As another example of terminating transmission in a cell, the AMF may determine a cell whose transmission is to be terminated. The AMF may instruct the determined cell to terminate transmission. The AMF may make the determination and/or issue the instruction similarly to the determination and/or the instruction by the AMF on a change in the PCI between the serving cell and the colliding cell, which is disclosed in the second embodiment. This can, for example, reduce the amount of signaling between base stations.

Another solution is disclosed. The transmission power in a cell is reduced. The UE may notify the serving cell of information on a PCI collision. The UE may include, in the notification, information on the received power from the cell in which a PCI collision has occurred. This can, for example, appropriately control the amount of power to be reduced in the cell.

The serving cell may reduce the transmission power. The serving cell may reduce the transmission power, for example, in the same manner that the serving cell changes the PCI, which is disclosed in the second embodiment. The UEs being served by the serving cell need not perform the random access procedure with the serving cell after the serving cell reduces the transmission power.

The UEs being served by the serving cell may continue the communication with the serving cell after the serving cell reduces the transmission power. This can, for example, avoid the complexity in the communication system.

As another example of reducing the transmission power in a cell, the colliding cell may reduce the transmission power. The colliding cell may reduce the transmission power, for example, in the same manner that the serving cell changes the PCI, which is disclosed in the second embodiment. A request for reducing the transmission power to be transmitted from the serving cell to the colliding cell may include information on the amount of power to be reduced. The serving cell may obtain, from the UE, information on the received power from the cell in which a PCI collision has occurred, and determine the amount of power to be reduced, using the information. This can, for example, flexibly control the amount of power to be reduced in the colliding cell.

As another example of reducing the transmission power in a cell, the reduction of the transmission power may be negotiated between the serving cell and the colliding cell. The negotiation may be performed similarly to the negotiation on a change in the PCI between the serving cell and the colliding cell, which is disclosed in the second embodiment. This can, for example, avoid the complexity in the communication system.

As another example of reducing the transmission power in a cell, the AMF may determine a cell in which the transmission power is to be reduced. The AMF may instruct the cell to reduce the transmission power. The AMF may make the determination and/or issue the instruction similarly to the determination and/or the instruction by the AMF on a change in the PCI between the serving cell and the colliding cell, which is disclosed in the second embodiment. This can, for example, avoid the complexity in the communication system.

The aforementioned solutions may be combined. For example, changing the PCI of a cell may be combined with terminating transmission in the cell. The serving cell, the colliding cell, or the AMF may determine to change the PCI of the cell and/or terminate transmission in the cell. This enables, for example, flexible operations in the communication system.

The second embodiment can avoid a PCI collision in the high-altitude UE. Consequently, a malfunction in the high-altitude UE can be prevented.

### The First Modification of the Second Embodiment

Although the second embodiment discloses an example where the UE, for example, the high-altitude UE detects a PCI collision, a base station, for example, a high-altitude base station may detect a collision between PCIs.

The base station may notify information on the detected collision between the PCIs to a cell with one of the PCIs. The base station may give the notification, for example, via an I/F between base stations (e.g., an Xn interface). In response to the notification, the cell with the PCI may negotiate the PCI, for example, change the PCI and/or terminate transmission in the cell.

As another example, the base station may notify the AMF of information on the detected PCI collision. The base station may give the notification, for example, via the N2 interface. In response to the notification, the AMF may negotiate the PCI. The AMF may instruct the colliding cell to change the PCI or terminate transmission in the cell. This can, for example, reduce the amount of signaling in the interface between the base stations.

The first modification of the second embodiment can reduce an increase in the amount of signaling between the UE and the base station, and also prevent a PCI collision between cells. This can consequently prevent the UE, for example, the high-altitude UE from falsely receiving the system information.

### The Third Embodiment

The communication between a UE and a NW through a relay in the SL communication has been proposed (see Non-Patent Document 29 (3GPP TR 23.703 V12.0.0)). The relay between the UE and the NW may be referred to as a UE-to-NW relay or a UE-NW relay. In this invention, the UE relaying data between the UE and the NW may be referred to as a relay UE.

For example, a RAN node (e.g., the gNB) sometimes needs to communicate not only with a UE in a coverage of the RAN node but also with a more distant UE. Here, a method using the UE-NW relay is applicable. For example, the gNB and a UE (may be referred to as a remote UE) communicate through a relay UE. The gNB and the relay UE communicate via the Uu, whereas the relay UE and the remote UE communicate via the PC5.

None discloses a method for communicating between the UE and the NW through the relay UE in the 5G system. None discloses, for example, methods for configuring the QoS flow and establishing the SLRB configuration for the communication between the UE and the NW through the relay UE. When the UE and the NW communicate through the relay UE, how to satisfy the QoS required for a service is a problem.

The third embodiment discloses a method for solving such a problem.

Conventionally in the communication between the UE and the NW in the 5G system, a PDU session is established between the UE and the NW. However, since the UE and the NW communicate through the relay UE in the UE-NW relay, the conventional method is not applicable. A PDU session when the UE and the NW communicate through the relay UE is disclosed.

The relay UE and the NW establish a PDU session. The relay UE and a CN node establish a PDU session. The CN node may be the UPF. The relay UE and a data network may establish a PDU session. The relay UE and the remote UE establish a PC5-S link. The UE and the NW communicate through the relay UE, using the PDU session and the PC5-S link.

The relay UE and the CN node establish a PDU session for relaying data. The relay UE and the remote UE establish the PC5-S link. The remote UE notifies the relay UE of information on the remote UE. The remote UE may notify the AMF or the SMF of information on the remote UE. Specific examples of the information on the remote UE include an identifier of the remote UE and IP information. The IP information may be an IP address. The other specific examples of the information on the remote UE may include information on the PC5-S link between the remote UE and the relay UE. Examples of the information on the PC5-S link may include an identifier of the PC5-S link, an identifier of the transmission source UE, an identifier of the transmission target UE, PC5 QoS flow information, a PC5 QoS flow identifier, SLRB configuration information, and an SLRB identifier. Examples of the information may include combinations of these.

The IP address of the remote UE may be IPv4. This can avoid the complexity of designing a device. The IP address of the remote UE may be IPv6. Consequently, many UEs can be accommodated in the communication network.

The relay UE may store information on the remote UE. The AMF/SMF may store information on the remote UE. The information on the remote UE may be associated with the relay UE. The information on the remote UE may be stored in association with the relay UE. The information on the remote UE may be associated with the PDU session established between the relay UE and the NW. The information on the remote UE may be stored in association with the PDU session established between the relay UE and the NW. For example, information on the remote UE may be stored in the context of the relay UE. Associating the information on the remote UE with the relay UE or with the PDU session established between the relay UE and the NW enables, for example, the AMF/SMF to recognize that the PDU session is not merely a PDU session between the relay UE and the CN but the PDU session for relaying data to the remote UE.

The AMF/SMF notifies the UPF of information on the remote UE. The UPF can recognize the information on the remote UE. The AMF/SMF may associate the information on the remote UE with the relay UE, and then notify the information. The AMF/SMF may associate the information on the remote UE with the PDU session established between the relay UE and the NW, and then notify the information. Associating the information on the remote UE with the relay UE or the PDU session established between the relay UE and the NW enables, for example the UPF to recognize that the PDU session is not merely a PDU session between the relay UE and the CN but the PDU session for relaying data to the remote UE.

Consequently, the PDU session between the relay UE and the NW can be associated with the PC5-S link between the relay UE and the remote UE.

The relay UE functioning as a router of the remote UE forwards the PC5-S link between the remote UE and the relay UE and the PDU session between the relay UE and the NW. The relay UE may forward them using the information on the remote UE.

This enables data communication between the remote UE and the UPF through the relay UE.

The QoS when the relay UE and the CN node establish a PDU session for relaying data is disclosed. A default QoS flow is configured for the PDU session. A default QoS may be provided for establishing the PDU session. Alternatively, a default QoS Class Identifier (QCI) or a default 5G QoS Identifier (5QI) may be provided. Alternatively, a QoS for the relay UE may be provided. The QoS for the relay UE may be used for establishing the PDU session. These QoS, QCI, or 5QI may be preconfigured. The QoS, the QCI, or the 5QI may be preconfigured, for example, in the AMF/SMF. Even when the QoS of a service to be communicated between the relay UE and the CN node is unknown, the PDU session can be established. When the service data is generated in the remote UE, the relay UE sometimes fails to recognize the QoS required for the service. Thus, the preconfigured QoS, QCI, or 5QI is effective in such a case.

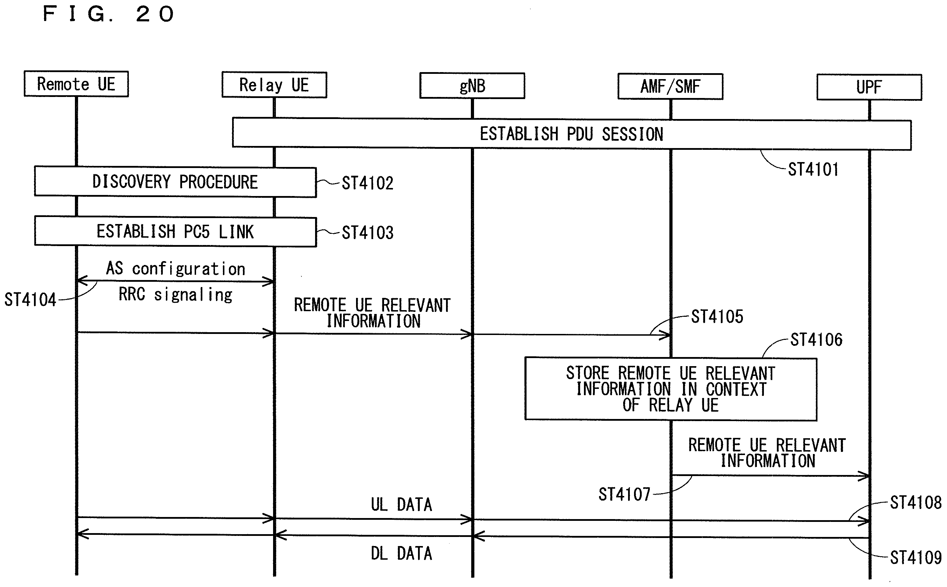

FIG. 20 is a sequence diagram illustrating the first example method for communicating between the UE and the NW through the relay UE according to the third embodiment. In Step ST4101, the relay UE performs a procedure for establishing the PDU session with the gNB, the AMF/SMF, and the UPF to establish the PDU session between the relay UE and the UPF. The relay UE should perform the procedure for establishing the PDU session before relaying data. The aforementioned method should be applied to establish the PDU session. The PDU session may be established, for example, using a default QoS. For example, a default QoS flow is configured for the PDU session.

In Step ST4102, the remote UE and the relay UE perform a discovery procedure for detecting a data transmission destination. In this discovery procedure, the relay UE may notify information indicating the presence of relay capability between the NW and the UE. Upon receipt of the information, the remote UE can recognize that the remote UE can communicate with the NW through the relay UE.

In this discovery procedure, the remote UE may notify information indicating that the remote UE is searching for the relay UE between the NW and the remote UE. The remote UE may notify information requesting a connection with the NW. The remote UE may notify information requesting to relay data to the NW. The remote UE may notify information indicating that the destination is the NW. Upon receipt of the information, the relay UE can recognize that the remote UE is requesting the connection with the NW through its own relay UE.

In Step ST4103, the remote UE and the relay UE perform a procedure for establishing the PC5-S link. The remote UE that has detected the relay UE for communicating with the NW may perform the procedure for establishing the PC5-S link with the relay UE in Step ST4103. Through this procedure, the remote UE and the relay UE establish the PC5-S link. In this procedure, the remote UE may notify information requesting a connection with the NW, information requesting relaying data to the NW, or information indicating that the destination is the NW. The relay UE can recognize that the remote UE is requesting a connection with the NW through its own relay UE.

In Step ST4104, the remote UE and the relay UE may mutually notify the AS configuration. The AS configuration may include, for example, the SLRB configuration for data communication, or an SLRB identifier. The remote UE and the relay UE may configure the PC5 QoS flow and establish the SLRB configuration for mapping the PC5 QoS flow, using the QoS required for the service to be communicated between the remote UE and the NW. For example, the remote UE calculates the QoS relevant information corresponding to the generated service. The remote UE should configure the PC5 QoS flow and a PC5 QoS flow identifier, from the QoS relevant information. Furthermore, the remote UE establishes the SLRB configuration for mapping the PC5 QoS flow. The remote UE may configure an identifier of the SLRB configuration. This enables the PC5 communication satisfying the QoS required for the service.

Information for mapping the QoS to the SLRB configuration may be preconfigured in the remote UE. When the remote UE is out of the coverage of the gNB, the remote UE should establish the SLRB configuration using the information for mapping the QoS to the SLRB configuration which has been preconfigured in its own remote UE. When the remote UE is within the coverage of the gNB, the remote UE should receive the information for mapping the QoS to the SLRB configuration which is broadcast from the gNB.

Alternatively, the remote UE may use the SLRB configuration dedicatedly notified from the gNB via the RRC signaling. Here, the remote UE should notify the gNB of the QoS relevant information on the generated service. The gNB should establish the SLRB configuration using the QoS relevant information on the service received from the remote UE. The gNB disclosed herein may be different from the gNB to be connected to the relay UE.

The QoS relevant information may include a PC5 QoS parameter (simply referred to as a QoS parameter by omitting PC5). The PC5 QoS parameter may include, for example, a PQI (see Non-Patent Document 26 (TS23.287 V16.2.0)). The QoS relevant information may include QoS characteristics (see Non-Patent Document 26 (TS23.287 V16.2.0)). The PC5 QoS parameter and the QoS characteristics may be referred to as a QoS profile.

The QoS relevant information may include a PC5 QoS flow identifier (PQI). This identifier may be used as information for identifying the QoS flow configured by the remote UE for the data communication with the relay UE in the PC5.

As the procedure for establishing the PC5-S link, a procedure for establishing the PC5-S link from the remote UE to the relay UE, from the relay UE to the remote UE, or from the remote UE to the relay UE and from the relay UE to the remote UE may be performed.

After the remote UE performs the procedure for establishing the PC5-S link with the relay UE and a process of notifying the relay UE of the AS configuration for the SL communication, the relay UE may perform a procedure for establishing the PC5-S link with the remote UE and a process of notifying the remote UE of the AS configuration for the SL communication.

After the remote UE performs the procedure for establishing the PC5-S link with the relay UE and the relay UE performs the procedure for establishing the PC5-S link with the remote UE, the remote UE may perform the process of notifying the relay UE of the AS configuration for the SL communication and the relay UE may perform the process of notifying the remote UE of the AS configuration for the SL communication.

This enables the bidirectional SL communication. Consequently, the remote UE can communicate with the NW, and the NW can communicate with the remote UE.

Information requesting to establish the PC5-S link may be provided. The remote UE may notify the relay UE of information requesting the relay UE to establish the PC5-S link with the remote UE. Upon receipt of the information, the relay UE starts the procedure for establishing the PC5-S link with the remote UE. The remote UE may give the notification via the PC5-S signaling from the remote UE to the relay UE. The remote UE may give the notification in the procedure for establishing the PC5-S link from the remote UE to the relay UE. This enables the remote UE to start the bidirectional procedure for establishing the PC5-S link. When a service with a bidirectional NW is generated in the remote UE, the remote UE that recognizes that the service is bidirectional can start the bidirectional procedure for establishing the PC5-S link.

Upon receipt of information requesting a connection with the NW from the remote UE, the relay UE may start the procedure for establishing the PC5-S link with the remote UE. Consequently, the remote UE and the relay UE perform the bidirectional procedure for establishing the PC5-S link when the remote UE is connected to the NW. Since notification of information requesting establishment of the PC5-S link is unnecessary, the signaling load can be reduced, and the complexity in the processes can be avoided.

When the service data is generated in the remote UE, the relay UE sometimes fails to recognize the QoS required for the service. In such a case, the relay UE has a problem of failing to establish the SLRB configuration for the SL communication with the remote UE.

A method for solving such a problem is disclosed.

A default QoS to be used by the relay UE for the SL communication with the remote UE is provided. Alternatively, a default QCI or a default 5QI may be provided. The relay UE establishes the SLRB configuration with the remote UE, using the default QoS. The relay UE may configure an identifier of the SLRB configuration. The relay UE may configure the PC5 QoS flow with the remote UE, using the default QoS. The relay UE may configure a PC5 QoS flow identifier. The relay UE notifies the remote UE of the established SLRB configuration. The relay UE may notify an SLRB identifier. The relay UE may notify the PC5 QoS flow. The relay UE may notify the PC5 QoS flow identifier. The relay UE may include these in the AS configuration and notify them. This enables the PC5 communication from the relay UE to the remote UE.

These QoS, QCI, or 5QI may be statically predetermined, for example, in a standard, preconfigured in the relay UE, or preconfigured from the NW to the relay UE. These QoS, QCI, or 5QI may be provided, for example, to the relay UE in the procedure for establishing the PDU session between the relay UE and the NW.

A default PC5 QoS flow to be used by the relay UE for the SL communication with the remote UE may be provided. A default SLRB configuration to be used by the relay UE for the SL communication with the remote UE may be provided. The relay UE configures the PC5 QoS flow with the remote UE, configures the PC5 QoS flow identifier, and establishes the SLRB configuration for mapping the PC5 QoS flow, using the default QoS flow and/or the default SLRB configuration. The relay UE may configure an identifier of the SLRB configuration. This enables the PC5 communication from the relay UE to the remote UE.

Providing the default QoS to be used by the relay UE for the SL communication with the remote UE is disclosed. The SL communication may be communication of service data or signaling. For example, a default QoS or a default SLRB configuration may be provided for the PC5-S signaling communication. The default SLRB configuration may be used for the PC5-S signaling communication from the relay UE to the remote UE. A default QoS or a default SLRB configuration may be provided for the RRC signaling communication. The default SLRB configuration may be used for the RRC signaling communication from the relay UE to the remote UE. This enables the PC5-S signaling and the RRC signaling from the relay UE to the remote UE.

A default QoS or a default SLRB configuration may be provided for the signaling from the remote UE to the relay UE. This enables the signaling from the remote UE to the relay UE. The default QoS or the default SLRB configuration for the signaling from the remote UE to the relay UE may be identical to those for the signaling from the relay UE to the remote UE. This simplifies processes for the SLRB configuration and the signaling.

Another method is disclosed.

The remote UE notifies the relay UE of the QoS relevant information. The relay UE establishes the SLRB configuration with the remote UE, using the QoS relevant information received from the remote UE. The relay UE may configure an identifier of the SLRB configuration. The relay UE may configure the PC5 QoS flow with the remote UE, using the QoS relevant information received from the remote UE. The relay UE may configure a PC5 QoS flow identifier. The relay UE notifies the remote UE of the established SLRB configuration. The relay UE may notify an SLRB identifier. The relay UE may notify the PC5 QoS flow. The relay UE may notify the PC5 QoS flow identifier. The relay UE may include these in the AS configuration and notify them. This enables the PC5 communication from the relay UE to the remote UE.

The remote UE may notify the relay UE of the QoS relevant information on the service generated in the remote UE. The relay UE should, for example, establish the SLRB configuration with the remote UE, using the QoS relevant information received from the remote UE on the service generated in the remote UE. This enables the SL communication in the PC5 which is appropriate for the QoS of the service generated in the remote UE.

The remote UE may notify the relay UE of service relevant information on the service generated in the remote UE. The relay UE may establish the PC5-S link with the remote UE, using the service relevant information received from the remote UE. The relay UE may calculate the QoS relevant information, using the service relevant information received from the remote UE. The relay UE may establish the SLRB configuration with the remote UE, using the calculated QoS relevant information. The relay UE may configure an identifier of the SLRB configuration. The relay UE may configure the PC5 QoS flow with the remote UE, using the calculated QoS relevant information. The relay UE may configure a PC5 QoS flow identifier. This enables the PC5 communication from the relay UE to the remote UE.

The service relevant information may include a service type (e.g., a PSID or an ITS-AID) and an identifier of the remote UE. The service relevant information may be associated with remote UE relevant information. The service relevant information may include the QoS relevant information or information on the QoS required for the service.

The remote UE may notify the relay UE of the QoS relevant information via the PC5-S signaling. The remote UE may give the notification in the procedure for establishing the PC5-S link from the remote UE to the relay UE. This enables the remote UE to give the notification early.

The remote UE may notify the relay UE of the QoS relevant information via the RRC signaling. The remote UE may include the information in the AS configuration from the remote UE to the relay UE, and notify the relay UE of the information. After the remote UE and the relay UE establish the AS configuration for the PC5 communication, the relay UE establishes the configuration for the remote UE. Thus, malfunctions in the procedure for the PC5 communication between the remote UE and the relay UE can be reduced.

Another method is disclosed.

The remote UE notifies the relay UE of the PC5 QoS flow information. The remote UE may notify the PC5 QoS flow identifier. The remote UE may notify the relay UE of the SLRB configuration. The remote UE may notify an SLRB identifier. The remote UE may notify not only a parameter required between a receiver and a transmitter but also a parameter required only for the transmitter as the SLRB configuration. This enables the SLRB configuration when the relay UE is the transmitter.

The remote UE may also notify a parameter required only for the receiver as the SLRB configuration. This enables the relay UE to recognize the parameter required for the remote UE. The relay UE configures the PC5 QoS flow and/or establishes the SLRB configuration with the remote UE, using the PC5 QoS flow information and/or the SLRB configuration received from the remote UE.

The relay UE may notify the remote UE that the PC5 QoS flow and/or the SLRB configuration received from the remote UE has been established for the PC5 communication from the relay UE to the remote UE. Alternatively, the relay UE may notify the remote UE of the established PC5 QoS flow and/or SLRB configuration. The relay UE may include these pieces of information in the AS configuration and notify them. This enables the PC5 communication from the relay UE to the remote UE.

The remote UE may notify the relay UE of the PC5 QoS flow information configured from the QoS of the service generated in the remote UE. The remote UE may notify the relay UE of the SLRB configuration for mapping the PC5 QoS flow. The relay UE should establish the SLRB configuration with the remote UE, using the PC5 QoS flow information and/or the SLRB configuration received from the remote UE. This enables the SL communication in the PC5 which is appropriate for the QoS of the service generated in the remote UE.

The aforementioned method should be appropriately applied to a method for notifying the PC5 QoS flow information and/or the SLRB configuration from the remote UE to the relay UE. This can produce the same advantages as previously described.

Another method is disclosed.

The relay UE notifies the gNB of the QoS relevant information. The relay UE may notify the gNB of the service relevant information. The gNB establishes the SLRB configuration, using the QoS relevant information received from the relay UE. The relay UE establishes the SLRB configuration for the PC5 communication with the remote UE, using the SLRB configuration received from the gNB. The relay UE notifies the remote UE of the established SLRB configuration. The relay UE may notify an SLRB identifier. The relay UE may include these in the AS configuration and notify them. This enables the PC5 communication from the relay UE to the remote UE.

The relay UE may give the notification to the gNB and the gNB may give the notification to the relay UE, via the Uu RRC signaling.

The QoS relevant information to be notified from the relay UE to the gNB may be the aforementioned default QoS, the aforementioned QoS relevant information received from the remote UE, or the QoS relevant information received from the remote UE on the service generated in the remote UE. The service relevant information to be notified from the relay UE to the gNB may be the aforementioned service relevant information on the service generated in the remote UE. The gNB can make the SLRB configuration for the PC5 communication from the relay UE to the remote UE appropriate for the QoS required for the service, using the QoS relevant information on the service generated in the remote UE.

In Step ST4105, the remote UE notifies the AMF/SMF of the remote UE relevant information through the relay UE and the gNB. In Step ST4106, the AMF/SMF stores the remote UE relevant information in the context of the relay UE to associate the remote UE relevant information with the relay UE. In Step ST4107, the AMF/SMF notifies the UPF of the remote UE relevant information. The AMF/SMF may associate the remote UE relevant information with the relay UE and then notify the information. This enables the UPF to recognize that the PDU session established with the relay UE is for relaying data to the remote UE. For example, when the DL data for the remote UE is generated, the UPF can transmit the DL data to the remote UE through the relay UE.

In Step ST4108, the remote UE and the UPF can communicate the UL data. In Step ST4109, the UPF and the remote UE can communicate the DL data.

When the PC5-S link between the remote UE and the relay UE is released (may be disconnected), the relay UE may start a process of releasing (may be disconnecting) a PDU session. Consequently, the PDU session need not be maintained when no service data is generated between the remote UE and the NW. This can eliminate wasteful use of resources in the relay UE, the gNB, and the CN node.

When the PDU session between the relay UE and the CN node is released, the relay UE may start a procedure for releasing the PC5-S link between the remote UE and the relay UE. The relay UE may notify the remote UE of information indicating that the PDU session has been released. Upon receipt of the information, the remote UE may perform the procedure for releasing the PC5-S link with the relay UE. Consequently, the PC5-S link need not be maintained when the PDU session between the relay UE and the CN is released for a certain cause. This can eliminate wasteful use of resources in the remote UE and the relay UE.

When the PC5-S link between the remote UE and the relay UE is released, the relay UE may maintain the PDU session. This enables the remote UE and the NW to communicate early when the service data is regenerated in the remote UE.

When the PDU session between the relay UE and the CN node is released, the PC5-S link between the remote UE and the relay UE may be maintained. This enables the remote UE and the NW to communicate early when the PDU session is re-established.

PDU session release request information may be provided. The remote UE may notify the relay UE of the PDU session release request information. The remote UE may notify the AMF/SMF of the PDU session release request information. When the service is terminated in the remote UE, the remote UE notifies the relay UE or the AMF/SMF through the relay UE and the gNB of the PDU session release request information. Upon receipt of the information, the relay UE releases the PDU session. Alternatively, upon receipt of the information, the AMF/SMF may release the PDU session.

The remote UE that has notified the relay UE or the AMF/SMF of the PDU session release request information may perform the procedure for releasing the PC5-S link. For example, when the PC5-S link is released and the PDU session is maintained because of immediate regeneration of the service data, the remote UE performs the procedure for releasing the PC5-S link without transmitting the PDU session release request information. The remote UE transmits the PDU session release request information and performs the procedure for releasing the PC5-S link when desiring to release the PC5-S link and the PDU session to terminate the service. This enables appropriate release of the PC5-S link and the PDU session.

Although the PDU session release request information is disclosed above, PDU session maintaining request information for requesting to maintain the PDU session may be used. Alternatively, information indicating a request for releasing or maintaining the PDU session may be used.

Another method for solving the aforementioned problem is disclosed.

After the remote UE and the relay UE establish the PC5-S link, the relay UE and the CN node establish a PDU session for relaying data. The remote UE notifies the relay UE of the service relevant information. After the remote UE and the relay UE establish the PC5-S link or while the remote UE and the relay UE are performing the procedure for establishing the PC5-S link, the remote UE may notify the relay UE of the service relevant information.

The relay UE notifies the CN node of the service relevant information. Before the relay UE and the CN node establish a PDU session for relaying data or while the relay UE and the CN node are performing a procedure for establishing the PDU session for relaying data, the relay UE may notify the CN node of the service relevant information.

The relay UE and the CN node may establish the PDU session for relaying data, using the service relevant information. The relay UE should establish the PDU session for relaying data between the relay UE and the CN node, using the service relevant information notified from the remote UE. The CN node should establish the PDU session for relaying data between the relay UE and the CN node, using the service relevant information notified from the relay UE.

This enables the relay UE and the CN node to establish the PDU session appropriate for the service to be communicated between the remote UE and the NW. This also enables the relay UE and the CN node to establish the PDU session according to the QoS required for the service to be communicated between the remote UE and the NW. Thus, the communication corresponding to the QoS required for the service becomes possible in the communication between the remote UE and the NW through the relay UE.

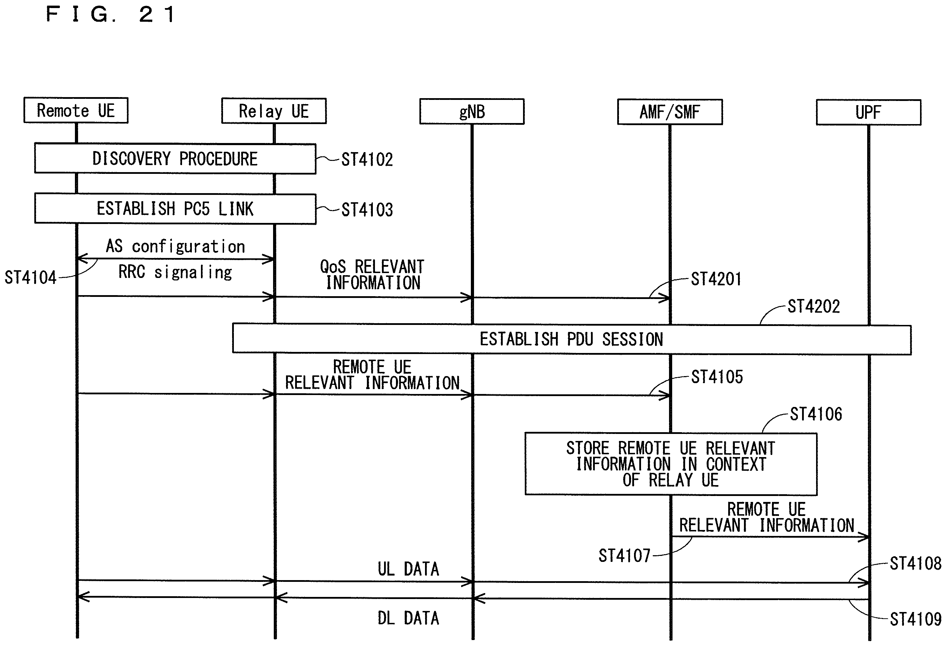

FIG. 21 is a sequence diagram illustrating the second example method for communicating between the UE and the NW through the relay UE according to the third embodiment. FIG. 21 discloses a method for establishing a PDU session for relaying data between the relay UE and the CN node after the remote UE and the relay UE have established the PC5-S link. In FIG. 21, the same step numbers are applied to the steps common to those in FIG. 20, and the common description thereof is omitted.

First, the remote UE and the relay UE perform the procedure for establishing the PC5-S link. In Step ST4102, the remote UE and the relay UE perform the discovery procedure for detecting a data transmission destination. In Step ST4103, the remote UE and the relay UE perform the procedure for establishing the PC5-S link. In Step ST4104, the remote UE and the relay UE may mutually notify the AS configuration. Through these procedures, the communication corresponding to the QoS required for the service becomes possible in the PC5 between the remote UE and the relay UE.

In Step ST4201, the remote UE notifies the relay UE of the service relevant information (the QoS relevant information on the service is exemplified in the example of FIG. 21). Upon receipt of the service relevant information, the relay UE can recognize the QoS relevant information on the service communicated by the remote UE. The relay UE notifies the gNB of the service relevant information. Upon receipt of the service relevant information, the gNB can recognize the QoS relevant information on the service communicated by the remote UE. The gNB notifies the AMF/SMF of the service relevant information. Upon receipt of the service relevant information, the AMF/SMF can recognize the QoS relevant information on the service communicated by the remote UE.

In Step ST4202, the relay UE performs the procedure for establishing the PDU session with the gNB, the AMF/SMF, and the UPF to establish the PDU session between the relay UE and the UPF. The AMF/SMF may notify the UPF of the service relevant information. The AMF/SMF may notify the UPF of the service relevant information in the procedure for establishing the PDU session. The PDU session should be established using information on the service. For example, the QoS flow for the PDU session may be configured using the relevant information on the QoS required for the service. For example, the QoS flow may be configured as the QoS for the PDU session so that the QoS required for the service is satisfied. For example, the QoS flow may be configured so that a value of each parameter of a PC5 5QI that is a 5QI in the PC5 (may be referred to as a PQI) required for the service includes a required value of each parameter of a 5QI for the PDU session. The relay UE should perform the procedure for establishing the PDU session before relaying data.

The NW may provide the relay UE with information for associating the QoS for the PDU session with the QoS in the PC5. For example, the CN node notifies, through the gNB, the relay UE of information for associating the 5QI for the PDU session with the PQI in the PC5 to map the PDU session to the PC5-S link. These pieces of information may be notified before or in the procedure for establishing the PDU session. The associating information may be notified after establishing the PDU session. For example, the PDU session may be modified using the associating information.

The information for associating the QoS for the PDU session with the QoS in the PC5 may be statically predetermined, for example, in a standard. Since signaling these pieces of information is unnecessary, the signaling load can be reduced.

The 5G system is based on the QoS flow not only in the PDU session between a UE and the CN node but also in the PC5 between UEs. This requires the configuration of the QoS flow/PC5 QoS flow or the SLRB configuration for mapping the PC5 QoS flow. For example, application of the associating information to these configurations enables establishment of not only the communication between the remote UE and the relay UE but also the PDU session appropriate for the service between the relay UE and the CN node. Thus, the communication corresponding to the QoS required for the service becomes possible in the communication between the remote UE and the NW through the relay UE.

In Step ST4201 or ST4202, the remote UE may notify the relay UE, the gNB, the AMF/SMF, or the UPF of not only the service relevant information but also the remote UE relevant information. The service relevant information may be associated with the remote UE relevant information. This can reduce the amount of signaling required between the nodes.

The PDU session may be modified using the service relevant information. For example, the PDU session may be modified so that the QoS flow using the relevant information on the QoS required for the service is configured.

For example, the relay UE and the CN establish the PDU session using the default QoS. Then, the remote UE and the relay UE establish the PC5-S link. After the remote UE and the relay UE establish the PC5-S link or while the remote UE and the relay UE are performing the procedure for establishing the PC5-S link, the remote UE may notify the relay UE of the service relevant information. The relay UE notifies the CN node of the service relevant information. Before the relay UE and the CN node establish a PDU session for relaying data or while the relay UE and the CN node are performing a procedure for establishing the PDU session for relaying data, the relay UE may notify the CN node of the service relevant information.

The relay UE and the CN node modify the PDU session for relaying data. The relay UE and the CN node may modify the PDU session for relaying data, using the service relevant information. The relay UE should modify the PDU session for relaying data between the relay UE and the CN node, using the service relevant information notified from the remote UE. The CN node should modify the PDU session for relaying data between the relay UE and the CN node, using the service relevant information notified from the relay UE.

For example, after the relay UE and the CN establish the PDU session using the default QoS and the remote UE communicates data with the NW through the relay UE, the relay UE and the CN node may modify the PDU session for relaying data as described above. This enables communication more appropriate for the QoS required for the service.

The remote UE may notify the relay UE, the gNB, the AMF/SMF, or the UPF of a request for modifying the PDU session. The remote UE may include the service relevant information in the request for modifying the PDU session, and notify the information. This enables the remote UE to request modification of the PDU session.

For example, the remote UE may monitor the QoS relevant information. The remote UE may monitor the QoS relevant information on the service to be communicated with the NW. Alternatively, the remote UE may monitor the QoS relevant information on the service to be communicated with the relay UE in the PC5. The QoS relevant information to be monitored may be a QoS parameter or a QoS character. This enables the remote UE to evaluate the QoS of the service to be communicated with the NW.

For example, when determining that the monitored QoS relevant information does not satisfy the relevant information on the QoS required for the service to be communicated with the NW, the remote UE may issue the request for modifying the PDU session. The remote UE includes the service relevant information in the request for modifying the PDU session, and notifies the relay UE, the gNB, the AMF/SMF, or the UPF of the request. Upon receipt of the request for modifying the PDU session, the AMF/SMF modifies the PDU session between the relay UE and the UPF, using the service relevant information. This enables communication more appropriate for the QoS required for the service.

The relay UE may notify the gNB, the AMF/SMF, or the UPF of a request for modifying the PDU session. The relay UE may include the service relevant information in the request for modifying the PDU session, and notify the request. This enables the relay UE to request modification of the PDU session.

For example, the relay UE may monitor the QoS relevant information. The relay UE may monitor the QoS relevant information on the service to be communicated with the NW. Alternatively, the relay UE may monitor the QoS relevant information on the service to be communicated with the remote UE in the PC5.

For example, when determining that the monitored QoS relevant information does not satisfy the relevant information on the QoS required for the service to be communicated with the NW, the relay UE may issue the request for modifying the PDU session. The relay UE includes the service relevant information in the request for modifying the PDU session, and notifies the gNB, the AMF/SMF, or the UPF of the request. Upon receipt of the request for modifying the PDU session, the AMF/SMF modifies the PDU session between the relay UE and the UPF, using the service relevant information. This enables communication more appropriate for the QoS required for the service.

The gNB may notify the AMF/SMF or the UPF of a request for modifying the PDU session. The gNB may include the service relevant information in the request for modifying the PDU session, and notify the request. This enables the gNB to request modification of the PDU session.

For example, the gNB may monitor the QoS relevant information. The gNB may monitor the QoS relevant information on the service to be communicated with the NW.

For example, when determining that the monitored QoS relevant information does not satisfy the relevant information on the QoS required for the service to be communicated with the NW, the gNB may issue the request for modifying the PDU session. The gNB includes the service relevant information in the request for modifying the PDU session, and notifies the AMF/SMF or the UPF of the request. Upon receipt of the request for modifying the PDU session, the AMF/SMF modifies the PDU session between the relay UE and the UPF, using the service relevant information. This enables communication more appropriate for the QoS required for the service.

The UPF may notify the AMF/SMF of a request for modifying the PDU session. Upon receipt of the request for modifying the PDU session, the AMF/SMF may modify the PDU session, using the service relevant information received from the remote UE.

For example, the UPF may monitor the QoS relevant information. The UPF may monitor the QoS relevant information on the service to be communicated with the relay UE or the remote UE.

For example, when determining that the monitored QoS relevant information does not satisfy the relevant information on the QoS required for the service to be communicated with the relay UE or the remote UE, the UPF may issue the request for modifying the PDU session. The UPF notifies the AMF/SMF of a request for modifying the PDU session. Upon receipt of the request for modifying the PDU session, the AMF/SMF modifies the PDU session between the relay UE and the UPF, using the service relevant information. This enables communication more appropriate for the QoS required for the service.

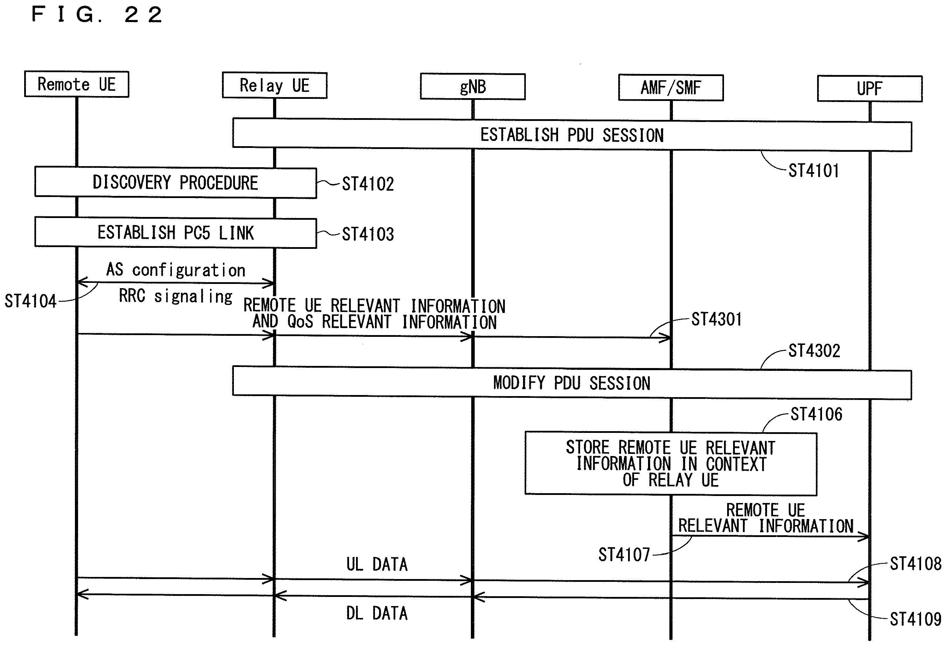

FIG. 22 is a sequence diagram illustrating a method for modifying the PDU session for relaying data between the relay UE and the CN node according to the third embodiment. In FIG. 22, the same step numbers are applied to the steps common to those in FIGS. 20 and 21, and the common description thereof is omitted.

In Step ST4101, the relay UE performs the procedure for establishing the PDU session with the gNB, the AMF/SMF, and the UPF to establish the PDU session between the relay UE and the UPF. The relay UE may establish the PDU session using a default QoS. For example, a default QoS flow is configured for the PDU session.

The remote UE and the relay UE perform the procedure for establishing the PC5-S link. In Step ST4102, the remote UE and the relay UE perform the discovery procedure for detecting a data transmission destination. In Step ST4103, the remote UE and the relay UE perform the procedure for establishing the PC5-S link. In Step ST4104, the remote UE and the relay UE may mutually notify the AS configuration. Through these procedures, the communication corresponding to the QoS required for the service becomes possible in the PC5 between the remote UE and the relay UE.

In Step ST4301, the remote UE notifies the relay UE of the remote UE relevant information and the service relevant information. Upon receipt of the service relevant information, the relay UE can recognize the QoS relevant information on the service communicated by the remote UE together with the remote UE relevant information. The relay UE notifies the gNB of the service relevant information.

Upon receipt of the service relevant information, the gNB can recognize the QoS relevant information on the service communicated by the remote UE together with the remote UE relevant information. The gNB notifies the AMF/SMF of the service relevant information. Upon receipt of the service relevant information, the AMF/SMF can recognize the QoS relevant information on the service communicated by the remote UE together with the remote UE relevant information.

In Step ST4302, the relay UE performs a procedure for modifying the PDU session with the gNB, the AMF/SMF, and the UPF to modify the PDU session between the relay UE and the UPF. The AMF/SMF may notify the UPF of the service relevant information. The PDU session should be modified using information on the service. For example, the QoS flow for the PDU session may be configured using relevant information on the QoS required for the service. The PDU session for relaying data between the relay UE and the CN node should be modified, using the service relevant information notified from the remote UE. The CN node should modify the PDU session for relaying data between the relay UE and the CN node, using the service relevant information notified from the relay UE.

This enables the relay UE and the CN node to modify the PDU session more appropriate for the service. Thus, the communication more appropriate for the QoS required for the service becomes possible in the communication between the remote UE and the NW through the relay UE.

As previously described, the service data is not generated in the relay UE. Thus, a method for configuring an RB to be used for the communication for relaying data between the relay UE and the gNB is a problem. A method for solving such a problem is disclosed. A default QoS is provided. The default QoS may be identical to that for establishing the PDU session between the relay UE and the CN node. An RB should be configured using the default QoS.

As another method, a default RB may be provided. Alternatively, a default RB for relaying data between the relay UE and the gNB may be provided. When the service data is generated in the remote UE, the relay UE sometimes fails to recognize the QoS required for the service. Thus, the RB is effective in such a case.

The relay UE and the NW establish the PDU session in the aforementioned method. Here, another method is disclosed.

The remote UE and the NW may establish a PDU session. The remote UE may perform the procedure for establishing the PDU session for the CN node. Alternatively, the CN node may perform the procedure for establishing the PDU session for the remote UE. The remote UE and the NW establish the PDU session through the relay UE.

The remote UE and the relay UE may establish the PC5-S link before the remote UE and the NW establish the PDU session. The signaling necessary for performing the procedure for establishing the PDU session between the remote UE and the NW should be performed via the PC5-S link.

The remote UE may notify the relay UE of the service relevant information in establishing the PC5-S link. The remote UE may notify the relay UE, the gNB, or the CN node of the service relevant information in the procedure for establishing the PDU session.

Establishment of the PDU session between the remote UE and the NW enables establishment of the PDU session appropriate for the QoS required for the service generated in the remote UE. The remote UE and the NW can perform communication more appropriate for the service.

When the remote UE is in a coverage of the gNB, the connection with the gNB may be prioritized. The remote UE is connected to the NW through the gNB. When the remote UE is not in a coverage of the gNB, the remote UE is connected to the gNB through the relay UE. The remote UE is connected to the NW through the relay UE and the gNB. As such, prioritizing the connection to the gNB enables the remote UE to access the NW early if the remote UE is in a coverage of the gNB.

Another method is disclosed. When the relay UE that can be connected to the gNB is found, the connection to the gNB through the relay UE may be prioritized. The remote UE is connected to the gNB through the relay UE. The remote UE is connected to the NW through the relay UE and the gNB. When the remote UE cannot find the relay UE that can be connected to the NW and is in a coverage of the gNB, the remote UE is connected to the gNB. The remote UE is connected to the NW through the gNB. Even when the remote UE is not in the coverage of the gNB but the remote UE can find the relay UE, prioritizing the connection to the relay UE enables the remote UE to access the NW early.

Another method is disclosed. When the remote UE is in the coverage of the gNB and finds the relay UE that can be connected to the gNB and predetermined conditions are satisfied, the connection to the gNB through the relay UE may be prioritized. The remote UE is connected to the gNB through the relay UE. The remote UE is connected to the NW through the relay UE and the gNB. Unless the predetermined conditions are satisfied, the remote UE is connected to the gNB. The remote UE is connected to the NW through the gNB. Examples of the predetermined conditions include received power, reception quality, a distance, and a congestion amount of SL resources.

For example, when the received power from the relay UE is larger than a predetermined threshold, the connection to the relay UE may be prioritized. For example, when the received power from the relay UE is larger than that from the gNB, the connection to the relay UE may be prioritized. The predetermined conditions and/or the threshold may be statically predetermined, for example, in a standard, or semi-statically or dynamically notified from the gNB or the CN node; alternatively, combinations of these may be performed. Consequently, the connection to the NW through the gNB or the relay UE can be flexibly configured. This enables appropriate configuration, according to a radio propagation state, a position relationship between the remote UE and the relay UE, or a congestion state of SL resources. Consequently, the QoS required for the service can be satisfied.

The method disclosed in the third embodiment enables the communication between the UE and the NW through the relay UE in the 5G system. When the UE and the NW communicate through the relay UE, the QoS required for the service can be satisfied.

### The First Modification of the Third Embodiment

Another method for establishing the SLRB configuration for mapping the service data between the remote UE and the relay UE is disclosed.

The remote UE obtains, through the relay UE, the SLRB configuration between the remote UE and the relay UE. The remote UE obtains, from the gNB to which the relay UE is connected, the SLRB configuration between the remote UE and the relay UE.

The remote UE notifies the relay UE of the service relevant information. The relay UE notifies the gNB to which the relay UE is connected of the service relevant information. The gNB calculates the SLRB configuration for mapping the service data between the remote UE and the relay UE. The gNB may calculate the SLRB configuration using the service relevant information received from the relay UE. The gNB notifies the relay UE of the calculated SLRB configuration. The gNB may associate the calculated SLRB configuration with the service relevant information, and notify the SLRB configuration.

The service relevant information may be information indicating the SLRB configuration for which service. The gNB may give the notification to the relay UE via dedicated signaling. The gNB may give the notification via dedicated RRC signaling. The relay UE notifies the remote UE of the SLRB configuration and the information indicating the SLRB configuration for which service. The remote UE establishes the SLRB configuration for mapping the service data between the remote UE and the relay UE, using the received SLRB configuration.

The remote UE notifies the relay UE of the SLRB configuration on the service to be communicated between the remote UE and the relay UE. The remote UE may associate the SLRB configuration with the service relevant information, and notify the SLRB configuration. The service relevant information may be information indicating the SLRB configuration for which service, for example, information indicating the SLRB configuration for which QoS flow. The relay UE establishes the SLRB configuration for mapping the service data between the remote UE and the relay UE, using the received SLRB configuration.

After notifying the remote UE of the SLRB configuration on the service to be communicated between the remote UE and the relay UE, the relay UE may establish the SLRB configuration for mapping the service data between the remote UE and the relay UE. The remote UE establishes the SLRB configuration for mapping the service data between the remote UE and the relay UE, using the received SLRB configuration. Since the relay UE can recognize, using the service relevant information, the SLRB configuration for which service data, the relay UE can establish the SLRB configuration for mapping the service data between the remote UE and the relay UE, without notification of the SLRB configuration from the remote UE.

This enables the SLRB configuration for mapping the service data between the remote UE and the relay UE. For example, even when the remote UE is out of the coverage of the gNB, the remote UE can obtain the SLRB configuration from the gNB through the relay UE. The gNB to which the relay UE is connected establishes the SLRB configuration for the remote UE. This can reduce the processing load of the remote UE. Furthermore, the SLRB configuration for a plurality of remote UEs that perform PC5 communication with relay UEs being served by the gNB can be controlled in a unified manner.

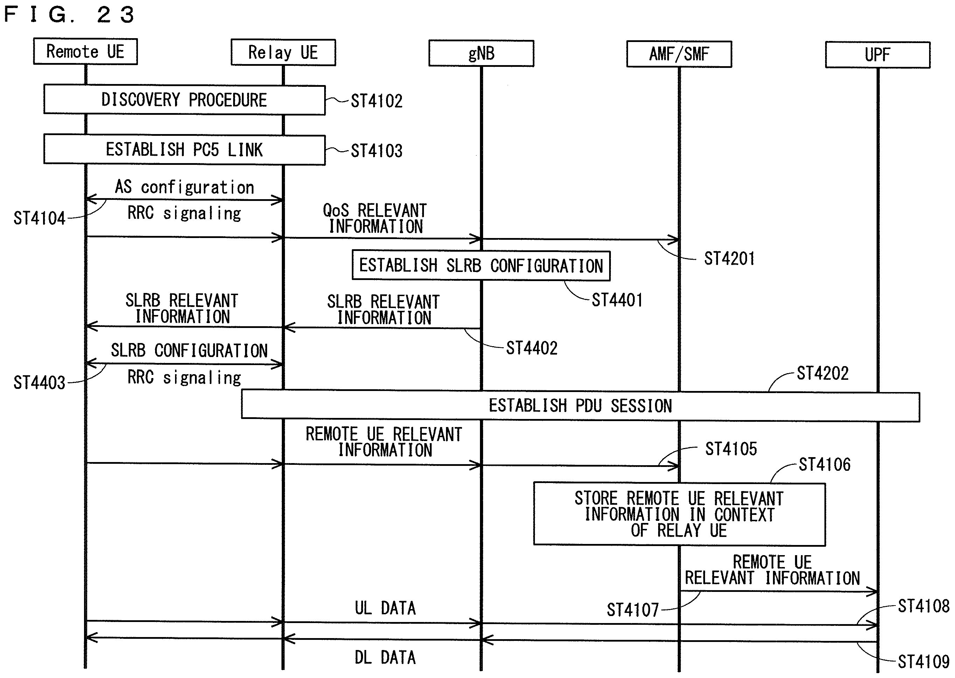

FIG. 23 is a sequence diagram illustrating an example method for the remote UE to obtain the SLRB configuration between the remote UE and the relay UE from the gNB to which the relay UE is connected according to the first modification of the third embodiment. FIG. 23 discloses an example where the remote UE and the NW communicate through the relay UE. In FIG. 23, the same step numbers are applied to the steps common to those in FIG. 21, and the common description thereof is omitted.

First, the remote UE and the relay UE perform the procedure for establishing the PC5-S link. In Step ST4102, the remote UE and the relay UE perform the discovery procedure for detecting a data transmission destination. In Step ST4103, the remote UE and the relay UE perform the procedure for establishing the PC5-S link. In Step ST4104, the remote UE and the relay UE may mutually notify the AS configuration. In the AS configuration in Step ST4104, the remote UE and the relay UE do not mutually notify the SLRB configuration to be used in their data communication yet.

In Step ST4201, the remote UE notifies the relay UE of the service relevant information. Upon receipt of the service relevant information, the relay UE can recognize the QoS relevant information on the service communicated by the remote UE. The relay UE notifies the gNB of the service relevant information. Upon receipt of the service relevant information, the gNB can recognize the QoS relevant information on the service communicated by the remote UE. The gNB notifies the AMF/SMF of the service relevant information. Upon receipt of the service relevant information, the AMF/SMF can recognize the QoS relevant information on the service communicated by the remote UE.

In Step ST4401, the gNB establishes the SLRB configuration for mapping the service, using the QoS relevant information on the service. In Step ST4402, the gNB notifies the relay UE of the calculated SLRB configuration. The gNB may associate the calculated SLRB configuration with the service relevant information, and notify the SLRB configuration. The gNB may notify information indicating the SLRB configuration for which service, for example, information indicating the SLRB configuration for which QoS flow.

The relay UE notifies the remote UE of the SLRB configuration calculated by the gNB. The relay UE may associate the SLRB configuration with the service relevant information, and notify the SLRB configuration. The relay UE may notify information indicating the SLRB configuration for which service, for example, information indicating the SLRB configuration for which QoS flow. The remote UE establishes the SLRB configuration for mapping the service data between the remote UE and the relay UE, using the received SLRB configuration.

In Step ST4403, the remote UE notifies the relay UE of the SLRB configuration on the service to be communicated between the remote UE and the relay UE. The remote UE may associate the SLRB configuration with the service relevant information, and notify the SLRB configuration. The service relevant information may be information indicating the SLRB configuration for which service, for example, information indicating the SLRB configuration for which QoS flow. The relay UE establishes the SLRB configuration for mapping the service data between the remote UE and the relay UE, using the received SLRB configuration.

This enables the gNB to which the relay UE is connected to establish the SLRB configuration for communicating the service data, in the PC5 communication between the remote UE and the relay UE. Thus, the communication corresponding to the QoS required for the service becomes possible in the communication between the remote UE and the NW through the relay UE.

Another method is disclosed.

The relay UE establishes the SLRB configuration between the remote UE and the relay UE. The remote UE obtains, from the relay UE, the SLRB configuration between the remote UE and the relay UE.

The gNB broadcasts the SLRB configuration, and information for mapping the QoS relevant information to the SLRB configuration. The SLRB configuration, and the information for mapping the QoS relevant information to the SLRB configuration may be for relaying data. Broadcasting the SLRB configuration and the information for relaying data enables its separate use from the normal SLRB configuration for the UE-to-UE direct communication between the UEs being served by the gNB. The relay UE receives the SLRB configuration, and the information for mapping the QoS relevant information to the SLRB configuration that are broadcast from the gNB. The relay UE establishes the SLRB configuration between the remote UE and the relay UE, using the QoS relevant information received from the remote UE, and the SLRB configuration and the information for mapping the QoS relevant information to the SLRB configuration which have been received from the gNB.

The gNB may notify the relay UE of the SLRB configuration and the information for mapping the QoS relevant information to the SLRB configuration via dedicated signaling. The gNB may notify the relay UE of the SLRB configuration and the information for mapping the QoS relevant information to the SLRB configuration via the RRC signaling. The relay UE establishes the SLRB configuration between the remote UE and the relay UE, using the QoS relevant information received from the remote UE, and the SLRB configuration and the information for mapping the QoS relevant information to the SLRB configuration which have been received from the gNB.

The relay UE notifies the remote UE of the SLRB configuration between the remote UE and the relay UE. The remote UE establishes the SLRB configuration between the remote UE and the relay UE, using the SLRB configuration received from the relay UE. Furthermore, the relay UE establishes the SLRB configuration between the remote UE and the relay UE, using the SLRB configuration established for the service data communication with the remote UE.

This enables the SLRB configuration for mapping the service data between the remote UE and the relay UE. For example, even when the remote UE is out of the coverage of the gNB, the remote UE can obtain the SLRB configuration from the gNB through the relay UE. Even when the relay UE is in an RRC_Idle state or in an RRC_Inactive state, the relay UE can establish the SLRB configuration using the information broadcast from the gNB. Furthermore, even when the relay UE is in an RRC_Connected state, the relay UE can establish the SLRB configuration using the information notified from the gNB via dedicated signaling.

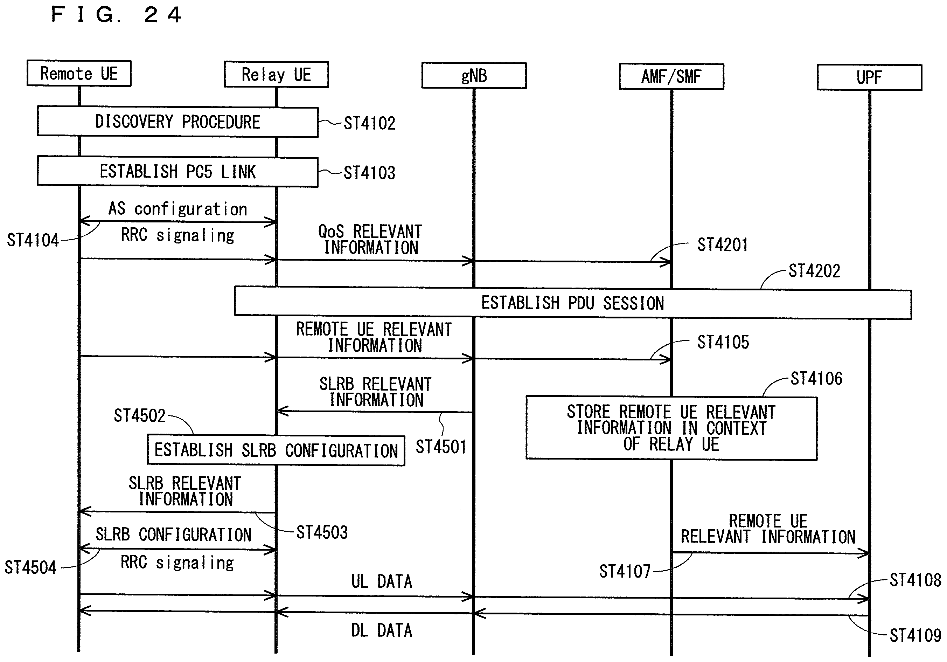

FIG. 24 is a sequence diagram illustrating an example method for the relay UE to establish the SLRB configuration between the remote UE and the relay UE according to the first modification of the third embodiment. In FIG. 24, the same step numbers are applied to the steps common to those in FIGS. 21 and 23, and the common description thereof is omitted.

In Step ST4501, the gNB broadcasts an SLRB configuration for relaying data, and information for mapping the QoS relevant information to the SLRB configuration. The broadcast timing is not limited to this. For example, when the gNB has been set up, the gNB may start broadcasting them. Alternatively, when the gNB supports the PC5 communication, the gNB may start broadcasting them. As another method, the gNB may start broadcasting them after receiving the QoS relevant information in Step ST4201. The gNB may broadcast the SLRB configuration corresponding to the received QoS relevant information. Thus, the gNB may broadcast a plurality of pairs of the SLRB configuration and the information for mapping the QoS relevant information to the SLRB configuration. This is effective, for example, in the presence of a plurality of relay UEs being served by the gNB.

In Step ST4501, the relay UE receives the SLRB configuration, and the information for mapping the QoS relevant information to the SLRB configuration that are broadcast from the gNB. In Step ST4502, the relay UE establishes the SLRB configuration between the remote UE and the relay UE, using the QoS relevant information received from the remote UE, and the SLRB configuration and the information for mapping the QoS relevant information to the SLRB configuration which have been received from the gNB. In Step ST4503, the relay UE notifies the remote UE of the SLRB configuration.

The relay UE may associate the SLRB configuration with the service relevant information, and notify the SLRB configuration. The service relevant information may be information indicating the SLRB configuration for which service, for example, information indicating the SLRB configuration for which QoS flow. The remote UE establishes the SLRB configuration for mapping the service data between the remote UE and the relay UE, using the received SLRB configuration.

In Step ST4504, the remote UE notifies the relay UE of the SLRB configuration on the service to be communicated between the remote UE and the relay UE. The remote UE may associate the SLRB configuration with the service relevant information, and notify the SLRB configuration. The service relevant information may be information indicating the SLRB configuration for which service, for example, information indicating the SLRB configuration for which QoS flow. The relay UE establishes the SLRB configuration for mapping the service data between the remote UE and the relay UE, using the received SLRB configuration.

This enables the relay UE to establish the SLRB configuration for communicating the service data in the PC5 communication between the remote UE and the relay UE. Thus, the communication corresponding to the QoS required for the service becomes possible in the communication between the remote UE and the NW through the relay UE.

### The Fourth Embodiment

Various services are assumed as services using the SL communication between UEs. Examples of the services include a service in which a Road Side Unit (RSU) in a traffic signal detects a vehicle approaching at a high speed and notifies pedestrians of emergency hazard information data, and a service allowing a pedestrian to detect a vehicle approaching at a high speed at an intersection and directly notify the vehicle of emergency hazard information data. Such services require reducing latency. Thus, reducing latency is a challenge in the data communication of the service using the SL communication between UEs.

The fourth embodiment discloses a method for addressing such a challenge.

The service data (user data or may be simply referred to as data) is transmitted and received in the control plane (CP) in the PC5. For example, data may be included in the signaling in a procedure for establishing the UE-to-UE direct communication using the PC5, and transmitted and received. For example, data may be included in the signaling in a direct communication procedure (see Non-Patent Document 26 (TS23.287)) for starting the UE-to-UE direct communication using the PC5, and transmitted and received. For example, data may be included in the signaling in the procedure for establishing the PC5-S link (PC5 layer-2 link or may be simply referred to as PC5 link), and transmitted and received. The data may be included in the PC5-S signaling, and transmitted and received.

Since UEs conventionally communicate data using the User Plane (UP) in the PC5, the communication requires processes including establishing a bearer configuration in the UP. Here, transmitting and receiving data in the CP in the PC5 can eliminate the processes including establishing the bearer configuration in the UP. Thus, the time until the data communication can be reduced.

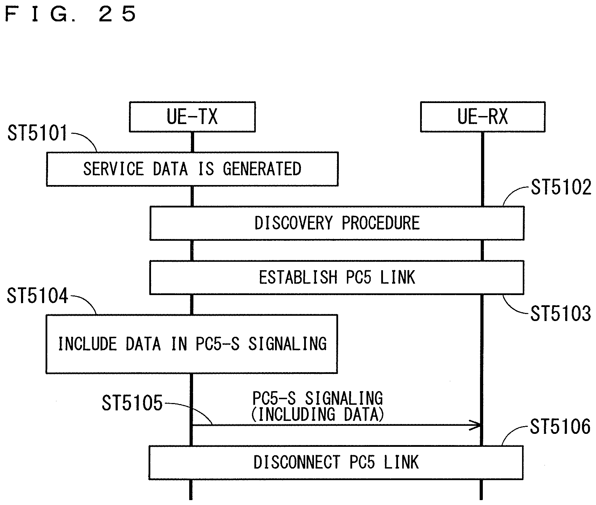

FIG. 25 is a sequence diagram illustrating the first example method for transmitting and receiving data in the CP in the PC5 according to the fourth embodiment. FIG. 25 illustrates an example where the V2X service has been generated in the UE-TX and the UE-TX transmits the service data to the UE-RX. FIG. 25 illustrates an example where data is included in the PC5-S signaling, and transmitted.

In Step ST5101, the service data using the SL communication is generated in the UE-TX. In Step ST5102, the UE-TX and the UE-RX perform the discovery procedure (see Non-Patent Document 26 (TS23.287)) for detecting a data transmission destination. In Step ST5103, the UE-TX and the UE-RX perform the procedure for establishing the PC5-S link. In Step ST5104, the UE-TX includes data in the PC5-S signaling. The UE-TX may include the data in a message for the PC5-S signaling. In Step ST5105, the UE-TX transmits, to the UE-RX, the PC5-S signaling including the data. The UE-TX may transmit, to the UE-RX, the message for the PC5-S signaling including the data.

Upon receipt of the PC5-S signaling, the UE-RX can receive the service data from the UE-TX.

After completing the transmission of the service data to the UE-RX, the UE-TX may perform a process of disconnecting the PC5-S link with the UE-RX in Step ST5106. This enables the UE-TX to transmit the data before configuring the SL radio bearer (SLRB) for transmitting the data to the UE-RX. This can expedite generating the service data to the completion of its transmission and reception.

Another example is disclosed. For example, data may be included in the PC5 RRC signaling, and transmitted and received. For example, the data may be included in the RRC signaling for notifying the AS configuration, and transmitted and received. For example, the data may be included in the RRC signaling for notifying the SLRB configuration, and transmitted and received.

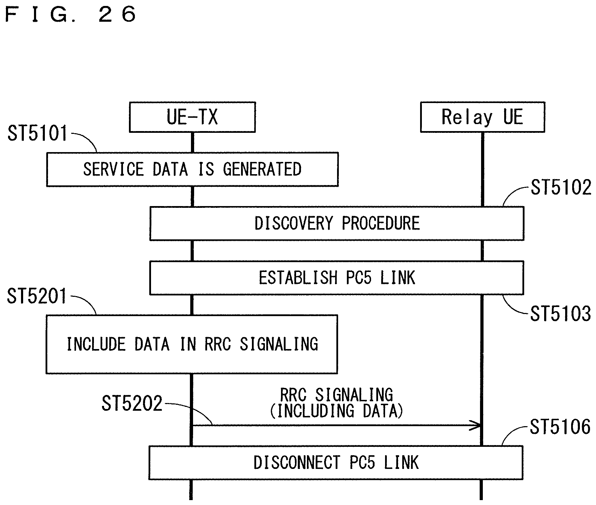

FIG. 26 is a sequence diagram illustrating the second example method for transmitting and receiving data in the CP in the PC5 according to the fourth embodiment. FIG. 26 illustrates an example where data is included in the PC5 RRC signaling, and transmitted. In FIG. 26, the same step numbers are applied to the steps common to those in FIG. 25, and the common description thereof is omitted.

In Step ST5101, the service data using the SL communication is generated in the UE-TX. In Steps ST5102 and ST5103, the UE-TX and the UE-RX establish the PC5-S link. In Step ST5201, the UE-TX includes the data in the PC5 RRC signaling. The UE-TX may include the data in a message for the PC5 RRC signaling. In Step ST5202, the UE-TX transmits, to the UE-RX, the PC5 RRC signaling including the data. The UE-TX may transmit, to the UE-RX, the message for the PC5 RRC signaling including the data.

Upon receipt of the PC5 RRC signaling, the UE-RX can receive the service data from the UE-TX.

After completing the transmission of the service data to the UE-RX, the UE-TX may perform a process of disconnecting the PC5-S link with the UE-RX in Step ST5106. This enables the UE-TX to transmit the data before establishing the SLRB configuration for transmitting the data to the UE-RX. This can expedite generating the service data to the completion of its transmission and reception.

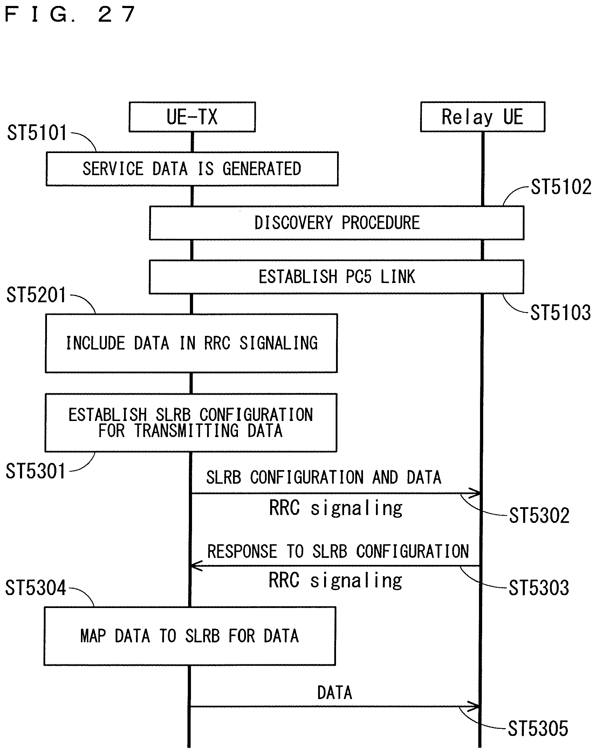

FIG. 27 is a sequence diagram illustrating the third example method for transmitting and receiving data in the CP in the PC5 according to the fourth embodiment. FIG. 27 illustrates an example where data is included in the PC5 RRC signaling for establishing the SLRB configuration for transmitting and receiving data, and transmitted and received. In FIG. 27, the same step numbers are applied to the steps common to those in FIG. 26, and the common description thereof is omitted.

In Step ST5101, the service data using the SL communication is generated in the UE-TX. In Steps ST5102 and ST5103, the UE-TX and the UE-RX establish the PC5-S link. In Step ST5201, the UE-TX includes the data in the PC5 RRC signaling. In Step ST5301, the UE-TX establishes the SLRB configuration for transmitting data. In Step ST5302, the UE-TX includes the SLRB configuration and the data in the PC5 RRC signaling, and transmits the SLRB configuration and the data to the UE-RX.

Upon receipt of the PC5 RRC signaling including the SLRB configuration and the data, the UE-RX can receive the service data from the UE-TX.

Upon receipt of the PC5 RRC signaling including the SLRB configuration and the data, the UE-RX can receive the SLRB configuration for transmitting data, from the UE-TX. In Step ST5303, the UE-RX transmits, to the UE-TX, a response to the SLRB configuration. The response to the SLRB configuration may be a notification indicating receipt or completion of the SLRB configuration. The UE-RX may transmit the response to the SLRB configuration via the PC5 RRC signaling. This enables the UE-TX to recognize that the SLRB configuration for transmitting and receiving data has been established with the UE-RX.

After recognizing that the SLRB configuration for data has been established with the UE-RX, the UE-TX maps the data to the SLRB in Step ST5304. In Step ST5305, the UE-TX transmits, to the UE-RX, the data mapped to the SLRB for data. In this manner, the UE-TX may change, from the CP to the UP, the transmission of data to the UE-RX.

This enables the UE-TX to transmit the data before establishing the SLRB configuration for transmitting the data to the UE-RX. This can expedite generating the service data to the completion of its transmission and reception. The UE-TX can satisfy the QoS required for the service by transmitting the data using the SLRB for transmitting the data after completing the SLRB configuration for transmitting the data with the UE-RX.

When changing, from the CP to the UP, the transmission of data to the UE-RX, the UE-TX should transmit and receive, in the CP, data being communicated in the CP. The UE-TX should transmit data in the UP, from data next to the data transmitted in the CP. This enables efficient communication.

As another method, when changing, from the CP to the UP, the transmission of data to the UE-RX, the UE-TX should retransmit, in the UP, the data being communicated in the CP. This causes the UE-RX to receive the same pieces of data in the CP and the UP. When the UE-RX has redundantly received the pieces of data, the UE-RX should discard one of the pieces of the data. For example, the UE-RX should discard the piece of the data received later. This enables the communication with high reliability.

As another example method for transmitting and receiving the service data in the CP in the PC5, the data may be included in the signaling after completion of a procedure for establishing the security in the UE-to-UE direct communication, and transmitted and received. This can ensure concealment of the communication. As another example, data may be included in the signaling in the discovery procedure, and transmitted and received. As another example, data may be included in the signaling in the UE-to-UE indirect communication through the relay UE or in a relay requesting procedure when the UE and the NW communicate, and transmitted and received. This can further shorten the time until the data communication.

Conventionally, the service data is transmitted in the UP in the PC5. Thus, the PC5 requires a method for transmitting the service data in the CP which is different from the conventional method. Here, the method for transmitting the service data in the CP is disclosed. A method for determining whether to transmit the service data in the CP in the PC5 is disclosed. The UE in which the service data has been generated, that is, the UE-TX makes the determination. The following discloses 11 specific examples of the determination method.
(1) Based on whether the procedure for establishing the security in the UE-to-UE direct communication is performed, whether the data can be transmitted in the CP is determined. For example, when the procedure for establishing the security is not performed, the data can be transmitted in the CP. When the procedure for establishing the security is performed, the data cannot be transmitted in the CP. This can ensure concealment of the communication in transmitting the data in the CP.
(2) Based on whether the QoS flow for transmitting the service data has been configured, whether the data can be transmitted in the CP is determined. For example, when the QoS flow is not configured, the data can be transmitted in the CP. When the QoS flow has been configured, the data cannot be transmitted in the CP. This can expedite transmission of the data before configuring the QoS flow for transmitting the data.
(3) Based on whether the AS configuration has been established between UEs, whether the data can be transmitted in the CP is determined. Whether the AS configuration has been established between UEs may be determined based on, for example, whether the UE-TX has transmitted the AS configuration to the UE-RX or whether the UE-TX has received the AS response from the UE-RX. For example, when the AS configuration is not established, the data can be transmitted in the CP. When the AS configuration has been established, the data cannot be transmitted in the CP. This can expedite transmission of the data before configuring the AS flow for transmitting the data.
(4) Based on whether the SLRB configuration has been established for mapping the QoS flow for transmitting the service data, whether the data can be transmitted in the CP may be determined. The SLRB for transmitting the data may be the DRB or a default bearer for data. For example, when the SLRB configuration is not established, the data can be transmitted in the CP. When the SLRB configuration has been established, the data cannot be transmitted in the CP. This can expedite transmission of the data before establishing the SLRB configuration for transmitting the data.
(5) Based on whether the SLRB configuration for transmitting the service data between UEs has been established, whether the data can be transmitted in the CP may be determined. Whether the SLRB configuration for transmitting the service data between UEs has been established may be determined based on, for example, whether the UE-TX has transmitted the SLRB configuration to the UE-RX or whether the UE-TX has received the SLRB configuration response from the UE-RX. For example, when the SLRB configuration is not established, the data can be transmitted in the CP. When the SLRB configuration has been established, the data cannot be transmitted in the CP. This can expedite transmission of the data before establishing the SLRB configuration for transmitting the data.
(6) Based on whether the RRC_Connected UE-TX has received the SLRB configuration from the gNB, whether the data can be transmitted in the CP may be determined. For example, when the UE-TX does not receive the SLRB configuration from the gNB, the data can be transmitted in the CP. When the UE-TX has received the SLRB configuration from the gNB, the data cannot be transmitted in the CP. This can expedite transmission of the data before receiving the SLRB from the gNB.
(7) Based on whether the RRC_Idle or RRC_Inactive UE-TX has received the SLRB configuration from the gNB, whether the data can be transmitted in the CP may be determined. For example, when the UE-TX does not receive the SLRB configuration from the gNB, the data can be transmitted in the CP. When the UE-TX has received the SLRB configuration from the gNB, the data cannot be transmitted in the CP. This can expedite transmission of the data before receiving the SLRB from the gNB.
(8) Whether the data can be transmitted in the CP may be determined using the amount of the service data to be transmitted. For example, when the amount of the service data to be transmitted is smaller than a predetermined amount, the data can be transmitted in the CP. When the amount of the service data to be transmitted is larger than the predetermined amount, the data cannot be transmitted in the CP. This can, for example, avoid signaling delay that may occur in including a large amount of data in the signaling in the CP and transmitting the data.
   The predetermined amount may be provided to the UE-TX in advance. For example, the CN node may provide the UE-TX with the predetermined amount. The predetermined amount may be provided in a procedure for providing the PC5 policy. Alternatively, the predetermined amount may be preconfigured in the UE-TX. The predetermined amount may differ depending on a service. The amount of data that can be transmitted in the CP can be configured for each service. This enables flexible configuration, for example, when the amount of data to be transmitted differs depending on a service.
(9) Whether the data can be transmitted in the CP may be determined using the amount of signaling to be transmitted. For example, when a sum of the amount of signaling and the amount of service data which are to be transmitted is smaller than a predetermined amount, the data can be transmitted in the CP. When the sum of the amount of signaling and the amount of the service data which are to be transmitted is larger than the predetermined amount, the data cannot be transmitted in the CP. For example, when the amount of signaling is larger, the aforementioned method can prevent decrease in the coding rate due to increase in the amount of transmission data with addition of the service data. Thus, the reliability of the signaling can be maintained. The method disclosed in (8) may be appropriately applied to the predetermined amount. This can produce the same advantages as previously described.
(10) Whether the data can be transmitted in the CP may be determined using the QoS required for the service to be transmitted. Whether the data can be transmitted in the CP may be determined using a part or all of the QoS parameters or the QoS characters, or the 5QI. One of the QoS characters required for the service is, for example, a packet delay budget indicating an amount of delay required for the service.

When the amount of the packet delay budget required for the service is smaller than a predetermined amount, the data can be transmitted in the CP. When the amount of the packet delay budget required for the service is larger than the predetermined amount, the data cannot be transmitted in the CP. For example, when the amount of delay required for the service is smaller, the data can be transmitted in the CP.

For example, when the 5QI required for the service is a predetermined 5QI, the data can be transmitted in the CP. When the 5QI required for the service is not the predetermined 5QI, the data cannot be transmitted in the CP. This enables, for example, transmission of the data in the CP according to the 5QI required for the service.

The predetermined amount or the predetermined 5QI may be provided to the UE-TX in advance. The aforementioned method should be applied. This enables flexible configuration, for example, according to the QoS that differs depending on a service.

(11) Combinations of (1) to (10) above.

This enables the UE-TX to determine whether to transmit the service data in the CP in the PC5. This enables the UE-TX to transmit the service data in the CP in the PC5.

Information on a transmission configuration in the CP in the PC5 may be provided. The information on the transmission configuration in the CP in the PC5 may be information indicating transmission permission/refuse information in the CP in the PC5.

The CN node may notify the UE-TX of the information on the transmission configuration in the CP in the PC5. The CN node may notify the UE-TX of the information in the procedure for providing the PC5 QoS policy. The CN node may include, in the PC5 QoS policy, the information on the transmission configuration in the CP in the PC5. This enables, for example, the CN node to configure whether to permit or refuse the transmission in the CP in the PC5, for the UE-TX.

The CN node may be, for example, the AMF. The AMF may configure the transmission in the CP in the PC5. For example, the AMF may configure the transmission in the CP in the PC5, using information on the UE-TX that has been provided from the PCF. The CN node may be, for example, the Application Function (AF). For example, a service provider may configure whether to permit or refuse the transmission in the CP in the PC5 through the AF.

The UE-TX may notify the CN node of a request for configuring transmission of data in the CP in the PC5. The UE-TX may notify the request in the procedure for providing the PC5 QoS policy to the CN node. This enables the UE-TX to request transmitting, in the CP, the service data generated in the UE-TX. For example, the UE-TX can request configuring transmission of data in the CP, according to a radio propagation state between UEs or a use state of radio resources.

The gNB may notify the UE-TX of the information on the transmission configuration in the CP in the PC5. The gNB may notify the information on the transmission configuration in the CP in the PC5 in a procedure for establishing the RRC connection between the UE-TX and the gNB. This enables, for example, the gNB to configure whether to permit or refuse the transmission in the CP in the PC5,
for the UE-TX.

The UE-TX may notify the gNB of a request for configuring transmission of data in the CP in the PC5. The UE-TX may notify the request in the procedure for establishing the RRC connection between the UE-TX and the gNB. This enables the UE-TX to request transmitting, in the CP, the service data generated in the UE-TX. For example, the UE-TX can request configuring transmission of data in the CP, according to a radio propagation state between UEs or a use state of radio resources.

The information on the transmission configuration in the CP in the PC5 may be preconfigured in the UE-TX. When the UE-TX is out of the coverage of the gNB, the information preconfigured in the UE-TX may be used. This enables the transmission configuration in the CP in the PC5 even when the UE-TX is out of the coverage of the gNB and cannot be connected to the NW.

The aforementioned method for determining whether the UE-TX can perform transmission in the CP in the PC5 may be combined with the information on the transmission configuration in the CP in the PC5 that is provided to the UE-TX. For example, when the transmission in the CP in the PC5 is refused, the transmission in the CP in the PC5 is impossible. When the transmission in the CP in the PC5 is permitted, the transmission in the CP in the PC5 is possible. Thus, whether the service data can be transmitted is determined with application of the method for determining whether the service data is transmitted in the CP in the PC5. This enables the transmission configuration in the CP including the NW.

The SLRB for transmitting data in the CP in the PC5 may be provided. The SLRB may be the SRB. The SLRB may have a default configuration. The data in the CP in the PC5 may be transmitted using the SLRB.

The SLRB for transmitting data in the CP in the PC5 may be the existing SLRB. The existing SLRB may be the SRB. The existing SLRB may have a default configuration. The data in the CP in the PC5 may be transmitted using the existing SLRB. Thus, a new SLRB for transmitting data in the CP in the PC5 need not be configured. This also enables transmission of data in the CP together with other CP information, using the same SLRB. Thus, a procedure for transmitting data in the CP in the PC5 can be facilitated.

A dataflow for transmitting, in the CP, the service data generated in the UE-TX is required. Here, the dataflow for transmitting the service data in the CP is disclosed.

The service data is forwarded to a protocol for processing the PC5 signaling (PC5 signaling protocol). For example, the service data output from the V2X layer is forwarded to the PC5 signaling protocol. The service data is included in the PC5-S message in the PC5 signaling protocol. This enables transmission of the service data via the PC5-S signaling.

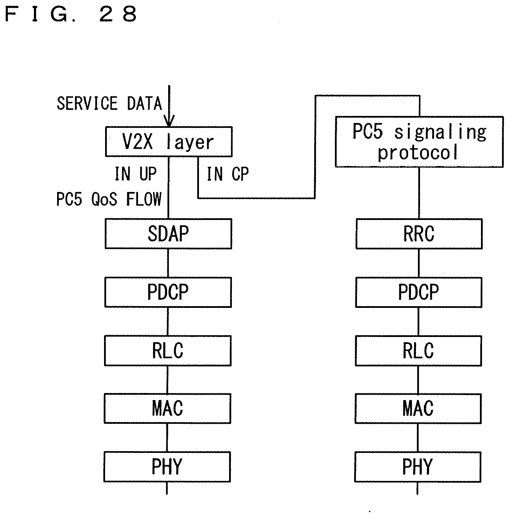

FIG. 28 illustrates the first example dataflow in the UE-TX when transmitting data in the CP according to the fourth embodiment. The V2X layer receives the data. The layer that receives the data need not be the V2X layer. The layer that receives the data should have a function of configuring the PC5 QoS flow from the QoS required for the service and mapping the data to the configured PC5 QoS flow.

In the conventional data transmission in the UP, data is mapped to the PC5 QoS flow configured in the V2X layer, and output. The data mapped to the PC5 QoS flow enters the SDAP. In the SDAP, the data is mapped to the SLRB for transmitting the data which has been configured to correspond to the PC5 QoS flow. The data mapped to the SLRB for transmitting the data is processed in each of protocols of the PDCP, the RLC, the MAC, and the PHY, and transmitted in the SL.

When data is transmitted in the CP, the data is mapped to the PC5 QoS flow configured in the V2X layer. The UE-TX may configure the PC5 QoS flow, and map data to the PC5 QoS flow, similarly to the UP. As another method, the UE-TX may configure the PC5 QoS flow for transmitting data in the CP, and map the data to the PC5 QoS flow. An identifier may be configured for the configured PC5 QoS flow. The data for the PC5 QoS flow for transmitting data in the CP enters the PC5 signaling protocol.

As another method, the UE-TX may enter data to be transmitted in the CP into the PC5 signaling, without configuring the QoS flow.

The UE-TX includes the service data entering the PC5 signaling protocol in the PC5-S message, and outputs the service data. The UE-TX enters the PC5-S message including the service data into the RRC. In the RRC, the PC5-S message including the service data is defined as an RRC message. The UE-TX may include the service data in the RRC message, as container information or capsule information. The UE-RX need not decode the container information or the capsule information in the RRC.

To the SLRB for the CP, for example, to the SRB, the UE-TX maps the RRC message including the service data output from the RRC, processes the RRC message in each of the protocols of the PDCP, the RLC, the MAC, and the PHY, and transmits the RRC message in the SL.

The UE-TX may enter the PC5-S message including the service data into the PDCP not via the RRC. The UE-TX may process the PC5-S message including the service data in each of the protocols of the PDCP, the RLC, the MAC, and the PHY, and transmit the PC5-S message in the SL. For example, the UE-TX may map the PC5-S message including the service data to the SRB not via the RRC, process the PC5-S message in each of the protocols of the PDCP, the RLC, the MAC, and the PHY, and transmit the PC5-S message in the SL.

Such dataflow can transmit, in the CP, the service data generated in the UE-TX.

Another example dataflow for transmitting the service data in the CP is disclosed.

The UE-TX forwards the service data to the RRC in the PC5. For example, the UE-TX forwards the service data output from the V2X layer to the RRC. In the RRC, the UE-TX includes the service data in the RRC message. This enables the UE-TX to transmit the service data via the RRC signaling.

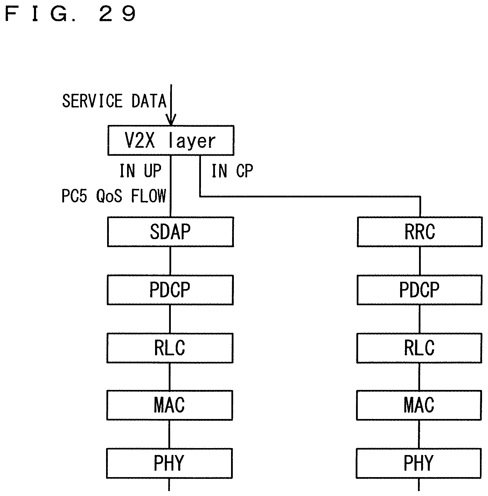

FIG. 29 illustrates the second example dataflow in the UE-TX when transmitting data in the CP according to the fourth embodiment. Differences with the invention in FIG. 28 are mainly described. The V2X layer receives data. When data is transmitted in the CP, the data is mapped to the PC5 QoS flow configured in the V2X layer. The data for the PC5 QoS flow for transmitting data in the CP enters the RRC.

As another method, the UE-TX may enter data to be transmitted in the CP into the RRC, without configuring the QoS flow.

The UE-TX includes the service data entering the RRC in the RRC message, and outputs the service data. The UE-TX maps the RRC message including the service data to the SLRB for the CP, for example, the SRB. The UE-TX processes the RRC message mapped to the SLRB for the CP in each of protocols of the PDCP, the RLC, the MAC, and the PHY, and transmits the RRC message in the SL.

Such dataflow can transmit, in the CP, the service data generated in the UE-TX.

Another example dataflow for transmitting the service data in the CP is disclosed.

An adaptor with a function of routing the service data to transmission in the UP and transmission in the CP may be provided. The aforementioned method for determining whether data is transmitted in the CP should be applied for the adaptor to determine whether the service data is routed to transmission in the UP and transmission in the CP.

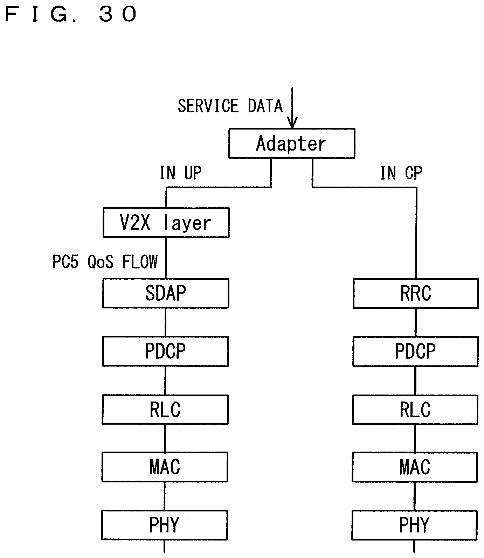

FIG. 30 illustrates the third example dataflow in the UE-TX when transmitting data in the CP according to the fourth embodiment. Differences with the invention in FIGS. 28 and 29 are mainly described. The adaptor receives data. The adaptor determines whether the data is transmitted in the UP or the CP. When data is transmitted in the UP, the data enters the V2X layer, and is transmitted in the SL according to the aforementioned method.

When data is transmitted in the CP, the data output from the adaptor enters the RRC in the PC5. The UE-TX may enter data to be transmitted in the CP into the RRC, without configuring the QoS flow. The UE-TX may configure the QoS flow, map data to be transmitted in the CP into the QoS flow, and enter the data in the RRC. As described above, the UE-TX may configure the PC5 QoS flow for transmitting data in the CP, and map the data to the PC5 QoS flow.

In the RRC, the UE-TX includes the service data in the RRC message. This enables the UE-TX to transmit the service data via the RRC signaling.

The UE-TX includes the service data entering the RRC in the RRC message, and outputs the service data. The UE-TX maps the RRC message including the service data to the SLRB for the CP, for example, the SRB. The UE-TX processes the RRC message mapped to the SLRB for the CP in each of protocols of the PDCP, the RLC, the MAC, and the PHY, and transmits the RRC message in the SL.

Such a dataflow can transmit, in the CP, the service data generated
in the UE-TX.

As another method, when data is transmitted in the CP, the data output from the adaptor may enter the PC5 signaling protocol. The UE-TX may enter data to be transmitted in the CP into the PC5 signaling protocol, without configuring the QoS flow. The UE-TX may configure the QoS flow, map the data to be transmitted in the CP into the QoS flow, and enter the data in the PC5 signaling protocol. As described above, the UE-TX may configure the PC5 QoS flow for transmitting data in the CP, and map the data to the PC5 QoS flow.

The UE-TX includes the service data entering the PC5 signaling protocol in the PC5-S message, and output the service data. The method disclosed in FIG. 28 should be appropriately applied to a method for transmitting the data entering the PC5 signaling protocol.

Such dataflow can transmit, in the CP, the service data generated in the UE-TX. This dataflow can transmit data via the PC5-S signaling, and avoid the complexity of the RRC signaling.

The aforementioned transmission dataflow in the UE-TX should be modified in the reception direction and appropriately applied as a reception dataflow in the UE-RX. The dataflow should be applied to the reception direction, using each of the aforementioned protocols, layers, or functions in the UE-TX. The service data received by the UE-RX in the SL communication is processed in each of the protocols of the PHY, the MAC, the RLC, and the PDCP of the SLRB configured for the CP. For example, in the example of FIG. 28, the data in the CP output from the PDCP is mapped to the configured QoS flow, enters the V2X layer, and is output as the service data.

This enables the UE-RX to receive, in the CP, the service data received from the UE-TX. This enables the UE-TX and the UE-RX to transmit and receive the service data in the CP.

Both of the dataflow for the UP and the dataflow for the CP may be simultaneously performed. For example, a large amount of service data is transmitted and received according to the dataflow for the UP. Smaller service data for data is transmitted and received according to the dataflow for the CP. These pieces of data may be simultaneously transmitted and received. The UE-TX and the UE-RX should be able to simultaneously process both of the dataflow for the UP and the dataflow for the CP.

Information indicating whether the UE can transmit data in the CP in the PC5, information indicating whether the UE can receive data in the CP, or information indicating whether the UE can transmit and receive data in the CP may be provided. Information indicating whether both transmission and reception in the UP in the PC5 and in the CP in the PC5 are possible may be provided. The UE may notify the UE performing the SL communication in the PC5 of these pieces of information. The UE may include these pieces of information in the UE capability. The UEs may mutually notify the UE capability including these pieces of information. The UE performing the SL communication can recognize whether the peer UE can communicate data in the CP, and whether the peer UE can communicate simultaneously both in the UP and the CP.

A channel for transmitting, in the CP, the service data generated
in the UE-TX is disclosed.

A control channel for transmitting data in the CP in the PC5 may be provided. For example, an SL Control Channel (SLCCH) may be provided. The control channel may be provided as a dedicated channel. The control channel may be provided as a PC5 logical channel. When data is transmitted in the CP, the data may be mapped to the control channel. For example, the UE-TX may transmit data to be transmitted in the CP in the SL by mapping the data to the SLCCH, mapping the SLCCH to the SL-SCH, and mapping the SL-SCH to the PSSCH. The UE-RX receives the SL-SCH from the received PSSCH, receives the SLCCH from the SL-SCH, and receives the service data mapped to the SLCCH. This can reduce malfunctions in the procedure for transmitting and receiving data in the CP.

The UE-TX may configure, for the UE-RX, the data communication in the CP in the PC5. The UE-TX may notify the UE-RX that the UE-TX configures the data communication in the CP in the PC5. Information on the data communication configuration in the CP in the PC5 (may be referred to as CP data communication relevant information) may be provided. The UE-TX may notify the UE-RX of the CP data communication relevant information.

The following discloses seven specific examples of the CP data communication relevant information.
(1) Information indicating whether data communication in the CP in the PC5 is configured
(2) Information indicating the aforementioned method on the dataflow
(3) Information indicating the aforementioned method for determining data communication in the CP
(4) The SLRB configuration for data communication in the CP in the PC5
(5) Information on the QoS flow for data communication in the CP in the PC5
(6) An identifier of the QoS flow for data communication in the CP in the PC5
(7) Combinations of (1) to (6) above

Consequently, the UE-RX can recognize, for example, whether the data communication with the UE-TX in the CP in the PC5 has been configured or how the data communication has been configured. This enables the UE-TX and the UE-RX to perform the data communication in the CP in the PC5.

The UE-TX may notify the UE-RX of the CP data communication relevant information in the procedure for establishing the PC5-S link. The UE-TX may notify the CP data communication relevant information, for example, directly using a communication request message. The UE-RX may notify the UE-TX of the receipt of the CP data communication relevant information. Alternatively, the UE-RX may notify the UE-TX of the completion of configuring the CP data communication. The UE-RX may notify the UE-TX of the completion of configuring the CP data communication in the procedure for establishing the PC5-S link. The UE-RX may notify the completion of configuring the CP data communication, for example, directly using a communication response message.

This enables the configuration in performing the PC5 communication. Consequently, the data communication configuration in the CP in the PC5 communication can be simplified.

These notifications may be made in the discovery procedure between the UE-TX and the UE-RX. For example, Mode B may be used in the notifications. The notifications may be transmitted in a solicitation message. This enables the earlier configuration.

These notifications may be made via the PC5 RRC signaling between the UE-TX and the UE-RX. For example, the notifications may be included in the AS configuration to be used in the PC5 communication, and transmitted. For example, the notifications may be included in the SLRB configuration to be used in the PC5 communication, and transmitted. This can reduce the amount of signaling.

These notifications may be made before the data communication in the CP in the PC5 between the UE-TX and the UE-RX. Consequently, the UE-RX can recognize, for example, whether the data communication between the UE-TX and the UE-RX in the CP in the PC5 has been configured or how the data communication has been configured. The UE-TX can recognize whether the UE-RX has configured the data communication in the CP in the PC5. This enables the UE-TX and the UE-RX to perform the data communication in the CP in the PC5.

The MAC header may include a field indicating inclusion of data in the CP in the PC5. A MAC control element (may be referred to as a MAC CE) indicating inclusion of data in the CP in the PC5 may be provided. A value indicating inclusion of data in the CP may be configured in the MAC header or the MAC CE. An LCID indicating inclusion of data in the CP in the PC5 may be provided. An LCID for transmitting data in the CP in the PC5 may be provided. When transmitting data in the CP in the PC5, the UE-TX configures the LCID in the MAC header. The UE-TX may configure the LCID, for example, in the SLCCH.

Consequently, the UE-RX can recognize whether data in the CP in the PC5 is included in the MAC. For example, the UE-RX can recognize whether the received data is control information or service data.

The RLC header may include a field indicating inclusion of data in the CP in the PC5. A value indicating inclusion of data in the CP may be configured in the RLC header. When transmitting data in the CP in the PC5, the UE-TX configures, in the RLC header, the value indicating inclusion of data in the CP.

A Data/Control (D/C) field in the RLC header may be extended. The field may be extended, for example, from 1 bit to 2 bits. A value indicating inclusion of data in the CP may be configured in the field. When transmitting data in the CP in the PC5, the UE-TX configures, in the field, the value indicating inclusion of data in the CP.

Consequently, the UE-RX can recognize whether data in the CP in the PC5 is included in the RLC. For example, the UE-RX can recognize whether the received data is control information or service data.

An RLC channel including data in the CP in the PC5 may be provided. When transmitting data in the CP in the PC5, the UE-TX transmits the data in the CP using the RLC channel. Upon receipt of the RLC channel, the UE-RX can recognize whether the data in the CP in the PC5 has been transmitted. For example, the UE-RX can recognize whether the received data is control information or service data.

The PDCP header may include a field indicating inclusion of data in the CP in the PC5. A value indicating inclusion of data in the CP may be configured in the PDCP header. When transmitting data in the CP in the PC5, the UE-TX configures, in the PDCP header, the value indicating inclusion of the data in the CP.

A Data/Control (D/C) field in the PDCP header may be extended. The field may be extended, for example, from 1 bit to 2 bits. A value indicating inclusion of data in the CP may be configured in the field. When transmitting data in the CP in the PC5, the UE-TX configures, in the field, the value indicating inclusion of the data in the CP.

Consequently, the UE-RX can recognize whether the data in the CP in the PC5 is included in the PDCP. For example, the UE-RX can recognize whether the received data is control information or service data.

The method disclosed in the fourth embodiment enables transmission and reception of data in the CP in the PC5. Thus, the conventional data communication between UEs does not require the processes including establishing the bearer configuration in the UP in the PC5. Thus, latency is reduced in the data communication of the service using the SL communication between UEs.

### The First Modification of the Fourth Embodiment

In the SL communication, not only the direct communication between UEs but also the indirect communication through a relay has been proposed (see Non-Patent Document 29 (3GPP TR 23.703 V12.0.0)). The relay between UEs may be referred to as a UE-to-UE relay or an inter-UE relay. In this invention, the UE relaying data between UEs may be referred to as a relay UE.

For example, when a plurality of platooning UEs are approaching an intersection, the UEs sometimes cannot perform direct communications due to obstruction of buildings, etc. Furthermore, the UEs sometimes need to communicate with not only neighboring UEs but also a plurality of more distant UEs. Here, a method using the inter-UE relay is applicable. For example, the SL communication between a transmission UE (may be referred to as a UE-TX) and a reception UE (may be referred to as a UE-RX) is performed through a relay UE. The SL communication between UEs through the relay UE may be referred to as UE-to-UE indirect communication.

In the UE-to-UE indirect communication through the relay UE, service data may be communicated in the CP in the PC5.

In the UE-to-UE indirect communication through the relay UE, the service data may be communicated between the UE-TX and the relay UE or between the relay UE and the UE-RX in the CP in the PC5. Alternatively, the service data may be communicated both between the UE-TX and the relay UE and between the relay UE and the UE-RX. The method disclosed in the fourth embodiment should be appropriately applied to these service data communications in the CP in the PC5.

Unlike the UE-to-UE direct communication, the relay UE forwards data in the UE-to-UE indirect communication through the relay UE. The relay UE may determine whether to transmit data received from the UE-TX to the UE-RX in the CP or in the UP. The method for determining whether to transmit the service data in the CP in the PC5, which is disclosed in the fourth embodiment, should be appropriately applied to the determination method.

For example, whether the SLRB configuration for transmitting the service data has been established between the relay UE and the UE-RX may determine whether the data can be transmitted in the CP. Whether the SLRB configuration for transmitting the service data has been established between the relay UE and the UE-RX may be determined by, for example, whether the relay UE has transmitted the SLRB configuration to the UE-RX or whether the relay UE has received the SLRB configuration response from the UE-RX.

For example, when the SLRB configuration is not established, the data can be transmitted in the CP. When the SLRB configuration has been established, the data cannot be transmitted in the CP. This can expedite transmission of the data before establishing the SLRB configuration for transmitting the data.

In this manner, whether data can be transmitted in the CP can be determined according to a state between the relay UE and the UE-RX.

Another method is disclosed. The UE-TX may determine whether the data received from the UE-TX is transmitted in the CP or in the UP, between the relay UE and the UE-RX. Information indicating whether the data is transmitted in the CP or in the UP may be provided. Information indicating whether the data is transmitted between the relay UE and the UE-RX in the CP or in the UP may be provided. The UE-TX notifies the relay UE of the information. The relay UE determines whether to transmit the data to the UE-RX in the CP or in the UP, according to the information.

When the information received from the UE-TX indicates transmission of the data in the UP, the relay UE transmits the data to the UE-RX in the UP. When the information received from the UE-TX indicates transmission of the data in the CP, the relay UE transmits the data to the UE-RX in the CP.

The information may be notified via the PC5-S signaling. This makes it possible to notify the information early. Alternatively, the information may be notified via the PC5 RRC signaling. For example, the SLRB configuration between the relay UE and the UE-RX may be notified from the UE-TX to the relay UE; here, information indicating whether the data is transmitted in the CP or in the UP may be included in the SLRB configuration. This can reduce the amount of signaling.

The information indicating whether the data is transmitted in the CP or in the UP may be included in the SDAP header, the PDCP header, the RLC header, or the MAC header. The UE-TX configures the information indicating whether the data is transmitted in the CP or in the UP in the SDAP header, the PDCP header, the RLC header, or the MAC header, and transmits the information to the relay UE. The relay UE determines whether to transmit the data to the UE-RX in the CP or in the UP, according to the information configured in the header and indicating whether the data is transmitted in the CP or in the UP.

This enables the UE-TX to determine whether the relay UE and the UE-RX communicate data in the CP. For example, the UE-TX may determine whether the relay UE communicates data to the UE-RX in the CP, according to, for example, the QoS required for the service generated in the UE-TX. Since the UE-TX in which the service data is generated can make the determination according to, for example, the QoS required for the service, the QoS required for the service can be satisfied.

Another method is disclosed. When the UE-TX and the relay UE communicate data in the CP, the relay UE and the UE-RX also communicate data in the CP. Upon receipt of data from the UE-TX in the CP, the relay UE transmits the data to the UE-RX in the CP. This enables the data communication between the UE-TX and the relay UE and between the relay UE and the UE-RX in the same plane (the CP or the UP). This can simplify a relay control procedure. Thus, malfunctions can be reduced.

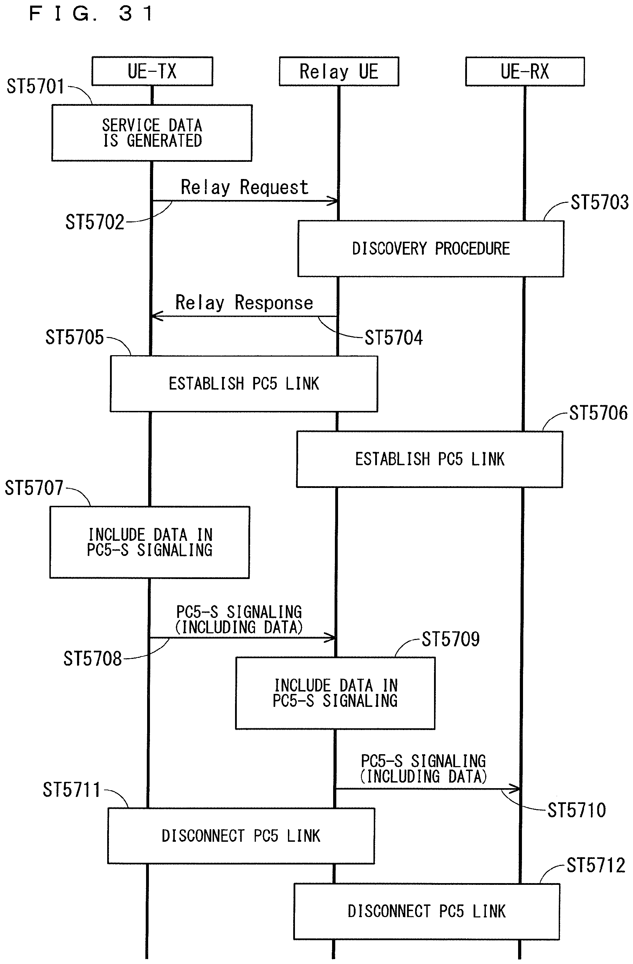

FIG. 31 is a sequence diagram illustrating the first example method for transmitting data through the relay UE in the CP according to the first modification of the fourth embodiment. The V2X service has been generated in the UE-TX. Then, the UE-TX transmits the service data to the UE-RX through the relay UE. FIG. 31 illustrates an example where data is included in the PC5-S signaling, and transmitted between the UE-TX and the relay UE and between the relay UE and the UE-RX.

In Step ST5701, the service data using the SL communication is generated in the UE-TX. In Step ST5702, the UE-TX starts a procedure for requesting the relay UE to relay data. In Step ST5703, the relay UE and the UE-RX perform the discovery procedure for detecting a data transmission destination. The relay UE that has detected the data transmission destination notifies the UE-TX of a relay response in Step ST5704. In the relay response, the relay UE may notify the UE-TX of information indicating that data can be relayed to the UE-RX that is the transmission destination. The UE-TX can recognize that data communication to the UE-RX through the relay UE is possible.

In Step ST5705, the UE-TX and the relay UE perform the procedure for establishing the PC5-S link. In Step ST5706, the relay UE and the UE-RX perform the procedure for establishing the PC5-S link. The method disclosed in the fourth embodiment and the aforementioned method should be appropriately applied to these service data communications in the CP in the PC5.

For example, the UE-TX determines to transmit data to the relay UE in the CP in the PC5. In Step ST5707, the UE-TX includes data in the PC5-S signaling. The UE-TX may include the data in a message for the PC5-S signaling. In Step ST5708, the UE-TX transmits, to the relay UE, the PC5-S signaling including the data. The UE-TX may transmit, to the relay UE, the message for the PC5-S signaling including the data.

Upon receipt of the data from the UE-TX in the CP, the relay UE determines to transmit the data to the UE-RX in the CP in the PC5. In Step ST5709, the relay UE includes the data in the PC5-S signaling. The relay UE may include the data in the message for the PC5-S signaling. In Step ST5710, the relay UE transmits, to the UE-RX, the PC5-S signaling including the data. The relay UE may transmit, to the UE-RX, the message for the PC5-S signaling including the data.

Upon receipt of the PC5-S signaling, the UE-RX can receive the service data from the UE-TX through the relay UE.

After completing the transmission of the service data to the relay UE, the UE-TX may perform a process of disconnecting the PC5-S link with the relay UE in Step ST5711. After completing the transmission of the service data to the UE-RX, the relay UE may perform the process of disconnecting the PC5-S link with the UE-RX in Step ST5712. This enables the UE-TX to transmit data to the UE-RX through the relay UE before the SLRB configuration for transmitting data between the UE-TX and the relay UE and between the relay UE and the UE-RX is established. This can expedite generating the service data to the completion of its transmission and reception in the UE-to-UE indirect communication through the relay UE.

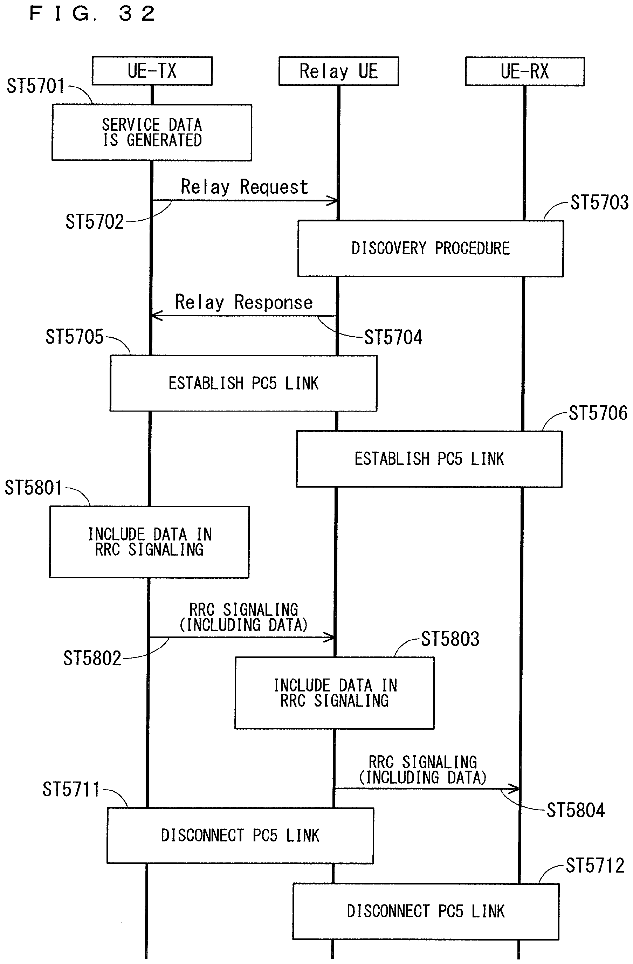

FIG. 32 is a sequence diagram illustrating the second example method for transmitting data through the relay UE in the CP according to the first modification of the fourth embodiment. The V2X service has been generated in the UE-TX. Then, the UE-TX transmits the service data to the UE-RX through the relay UE. FIG. 32 illustrates an example where data is included in the PC5 RRC signaling and transmitted between the UE-TX and the relay UE and between the relay UE and the UE-RX. In FIG. 32, the same step numbers are applied to the steps common to those in FIG. 31, and the common description thereof is omitted.

In Step ST5701, the service data using the SL communication is generated in the UE-TX. In Steps ST5702 to ST5706, the PC5-S link is established between the UE-TX and the relay UE and between the relay UE and the UE-RX. In Step ST5801, the UE-TX includes the data in the PC5 RRC signaling. The UE-TX may include the data in a message for the PC5 RRC signaling. In Step ST5802, the UE-TX transmits, to the relay UE, the PC5 RRC signaling including the data. The UE-TX may transmit, to the relay UE, the message for the PC5 RRC signaling including the data.

Upon receipt of the data from the UE-TX in the CP, the relay UE determines to transmit the data to the UE-RX in the CP in the PC5. In Step ST5803, the relay UE includes the data in the PC5 RRC signaling. The relay UE may include the data in the message for the PC5 RRC signaling. In Step ST5804, the relay UE transmits, to the UE-RX, the PC5 RRC signaling including the data. The relay UE may transmit, to the UE-RX, the message for the PC5 RRC signaling including the data.

Upon receipt of the PC5 RRC signaling, the UE-RX can receive the service data from the UE-TX through the relay UE.

This enables the UE-TX to transmit data to the UE-RX through the relay UE before the SLRB configuration for transmitting data between the UE-TX and the relay UE and between the relay UE and the UE-RX is established. This can expedite generating the service data to the completion of its transmission and reception in the UE-to-UE indirect communication through the relay UE.

In the UE-to-UE indirect communication through the relay UE, the UE-TX and the UE-RX may establish the PC5-S link. In such a case, the service data may be transmitted between the UE-TX and the UE-RX in the CP. The method disclosed in the fourth embodiment should be appropriately applied. For example, the UE-TX may determine whether the service data is transmitted between the UE-TX and the UE-RX in the CP.

The UE-TX may determine whether the service data is transmitted between the UE-TX and the UE-RX in the CP by, for example, determining whether the bearer configuration for transmitting data in the UP has been established between the UE-TX and the UE-RX. When the bearer configuration for transmitting data in the UP is not established at least between the UE-TX and the relay UE, between the relay UE and the UE-RX, or between the UE-TX and the UE-RX, the UE-TX may determine that the bearer configuration for transmitting data in the UP is not established between the UE-TX and the UE-RX. When no bearer configuration for transmitting data in the UP is established between the UE-TX and the UE-RX, the UE-TX transmits the data in the CP. When the bearer configuration for transmitting data in the UP has been established between the UE-TX and the UE-RX, the UE-TX transmits the data in the UP.

A method for transmitting data in the CP may be, for example, including the data in the PC5-S signaling from the UE-TX to the UE-RX and transmitting the data.

This enables transmission of the service data in the CP even when the UE-TX and the UE-RX establish the PC5-S link in the UE-to-UE indirect communication through the relay UE. This can expedite generating the service data to the completion of its transmission and reception in the UE-to-UE indirect communication through the relay UE.

### The Fifth Embodiment

In 3GPP, NW slicing of slicing NW resources and using the slice for each service has been discussed (see Non-Patent Document 16 (TS38.300)). In the NW slicing, a different slice is used for each PDU session. Thus, Single layer-Network Slice Selection Assistance Information (S-NSSAI) indicating an identifier of one slice is given for each PDU session.

The RAN node and the AMF mutually notify a list of pieces of S-NSSAI to be supported in advance. The AMF notifies the RAN node of the S-NSSAI to be used in the PDU session when establishing the PDU session. The AMF includes the S-NSSAI information in a PDU session resource setup request message and notifies the RAN node of the information. In such a manner, the AMF requests the RAN node to reserve and use resources for the slices.

In the PC5 communication, one V2X service is associated with one or more QoS flows. Furthermore, one PC5-S link is associated with one or more V2X services. One PC5-S link is associated with one or more QoS flows for the same V2X service or different V2X services.

Consequently, the QoS is managed based on the QoS flow in the V2X service using the PC5 communication. Thus, the PDU session is not established. Thereby, in an attempt to perform the NW slicing in the V2X service using the PC5 communication, the PDU session for configuring the S-NSSAI is not established. Thus, the NW slicing cannot be performed.

The fifth embodiment discloses a method for solving such a problem.

A different slice is used for each V2X service. One piece of S-NSSAI is given for each V2X service. Alternatively, a different slice may be used for each V2X service group consisting of one or more V2X services. One piece of S-NSSAI may be given for each V2X service group. A different slice may be used for each PC5-S link. One piece of S-NSSAI may be given for each PC5-S link.

One or more slices may be used for each V2X service. One or more pieces of S-NSSAI may be given for each V2X service. For example, a different slice may be used for each PC5 QoS flow. One piece of S-NSSAI may be given for each PC5 QoS flow.

A QoS rule for the PC5 communication may be configured for each QoS flow (each PC5 QoS flow) for the PC5 communication. A QoS parameter for the PC5 communication may be configured for each QoS flow for the PC5 communication. A QoS flow for the PC5 communication may be configured for each QoS parameter for the PC5 communication. For example, when a plurality of QoS parameters are configured for the V2X service using the PC5 communication, a different slice may be used for each of the QoS parameters. One piece of S-NSSAI may be given for each of the QoS parameters. Consequently, a different slice is used for each PC5 QoS flow.

Thereby, the unit for dividing resources into slices in the PC5 communication is configured.

The UE-to-UE indirect communication between the UE-TX and the UE-RX through the relay UE is disclosed.

Information on the S-NSSAI for the PC5 communication is provided to the UE-TX. The information on the S-NSSAI for the PC5 communication may be, for example, S-NSSAI information for the PC5 communication that can be supported in the UE-TX. The information may be, for example, S-NSSAI information for the PC5 communication or information associating the pieces of S-NSSAI with services. For example, the CN node notifies the UE-TX of the information on the S-NSSAI for the PC5 communication. The CN node may be, for example, the PCF or the AMF. The CN node may notify the UE of the information on the S-NSSAI for the PC5 communication through the gNB.

The information on the S-NSSAI for the PC5 communication may be preconfigured in the UE-TX. The information preconfigured in the UE-TX may be used when the UE-TX is out of the coverage of the gNB and cannot be connected to the NW. The UE-TX even out of the coverage of the gNB can obtain the information on the S-NSSAI for the PC5 communication.

The information on the S-NSSAI for the PC5 communication may be provided to the relay UE or the UE-RX. The aforementioned method may be applied. This enables the relay UE or the UE-RX to obtain the information on the S-NSSAI for the PC5 communication.

The UE-TX determines a service to be implemented using the PC5 communication, and the S-NSSAI corresponding to the service. The UE-TX may make the determination using the information associating the pieces of S-NSSAI with the services which has been received from the CN node. The UE-TX notifies the relay UE of the determined S-NSSAI. The UE-TX may associate the determined S-NSSAI with the service and notify the S-NSSAI. The UE-TX may give the notification, for example, via the PC5-S signaling or the RRC signaling. The UE-TX may include the notification in the AS configuration, and transmit the notification.

The UE-TX determines the PC5 QoS flow for transmitting service data to be implemented using the PC5 communication, and the S-NSSAI corresponding to the PC5 QoS flow. The UE-TX notifies the relay UE of the determined S-NSSAI. The UE-TX may associate the determined S-NSSAI with the PC5 QoS flow and notify the S-NSSAI. A PC5 QoS Flow Indicator (PFI) may be used for identifying the PC5 QoS flow.

The UE-TX may give the notification using the signaling for notifying the PFI from the UE-TX to the relay UE. The UE-TX may give the notification, for example, via the PC5-S signaling or the RRC signaling. The UE-TX may include the notification in the AS configuration, and transmit the notification.

The UE-TX may associate the determined S-NSSAI with the QoS relevant information used for calculating the PC5 QoS flow, and notify the relay UE of the S-NSSAI. The UE-TX may give the notification using the signaling for notifying the QoS relevant information from the UE-TX to the relay UE. The UE-TX may give the notification, for example, via the PC5-S signaling or the RRC signaling. The UE-TX may include the notification in the AS configuration, and transmit the notification.

The UE-TX determines the PC5-S link established for the service to be implemented using the PC5 communication, and the S-NSSAI corresponding to the PC5-S link. The UE-TX notifies the relay UE of the determined S-NSSAI. The UE-TX may associate the determined S-NSSAI with the PC5-S link and notify the S-NSSAI. An identifier for identifying the PC5-S link may be used. The UE-TX may give the notification, for example, via the PC5-S signaling or the RRC signaling. The UE-TX may include the notification in the AS configuration, and transmit the notification.

The UE-TX determines a transmission destination of the service to be implemented using the PC5 communication, and the S-NSSAI corresponding to the transmission destination. The UE-TX notifies the relay UE of the determined S-NSSAI. The UE-TX may associate the determined S-NSSAI with the transmission destination, and notify the S-NSSAI. The UE-TX may identify the transmission destination using a Destination Layer2 ID (DST L2ID). The UE-TX may give the notification using the signaling for notifying the PFI from the UE-TX to the relay UE. The UE-TX may give the notification, for example, via the PC5-S signaling or the RRC signaling. The UE-TX may include the notification in the AS configuration, and transmit the notification.

This enables the relay UE to recognize not only the service, the PC5-S link, and the PC5 QoS flow, etc., from the UE-TX but also the S-NSSAI to be used for them.

The relay UE may notify the UE-RX of the S-NSSAI or information associating the pieces of S-NSSAI with the services. The relay UE may give the notification, for example, via the PC5-S signaling or the RRC signaling. The relay UE may include the notification in the AS configuration, and transmit the notification.

The relay UE may associate the S-NSSAI with the PC5 QoS flow and notify the UE-RX of the S-NSSAI. The relay UE may give the notification using the signaling for notifying the PFI from the relay UE to the UE-RX. The relay UE may give the notification, for example, via the PC5-S signaling or the RRC signaling. The relay UE may include the notification in the AS configuration, and transmit the notification.

The relay UE may associate the S-NSSAI with the QoS relevant information used for calculating the PC5 QoS flow, and notify the UE-RX of the S-NSSAI. The relay UE may give the notification using the signaling for notifying the QoS relevant information from the relay UE to the UE-RX. The relay UE may give the notification, for example, via the PC5-S signaling or the RRC signaling. The relay UE may include the notification in the AS configuration, and transmit the notification.

The relay UE may associate the S-NSSAI with the PC5-S link and notify the UE-RX of the S-NSSAI. The relay UE may give the notification using an identifier for identifying the PC5-S link. The relay UE may give the notification, for example, via the PC5-S signaling or the RRC signaling. The relay UE may include the notification in the AS configuration, and transmit the notification.

The relay UE may associate the S-NSSAI with the transmission destination, and notify the UE-RX of the S-NSSAI. The relay UE may give the notification using the signaling for notifying the PFI from the relay UE to the UE-RX. The relay UE may give the notification, for example, via the PC5-S signaling or the RRC signaling. The relay UE may include the notification in the AS configuration, and transmit the notification.

This enables the UE-RX to recognize not only the service, the PC5-S link, and the PC5 QoS flow, etc., from the relay UE but also the S-NSSAI to be used for them.

The radio resources in the UE performing the PC5 communication may be divided into slices. Examples of the radio resources in the UE include a buffer capacity to be used in the UE and the control processing capability in the UE. The UE performing the PC5 communication may be the UE-TX, the relay UE, or the UE-RX. The relay UE can configure the radio resources to be used in a use UE, using information on, for example, the service using the PC5 communication and the S-NSSAI corresponding to the information which have been received from the UE-TX. The UE-RX can configure the radio resources to be used in a use UE, using information on, for example, the V2X service using the PC5 communication and the S-NSSAI corresponding to the information which have been received from the relay UE.

A management node may configure the radio resources in the UE performing the PC5 communication using slices. For example, the Operations, Administration, Maintenance (OAM) may establish the configuration. The management node may notify the UE performing the PC5 communication of the radio resources to be used for the slices in advance. This enables UEs under management of the management node to use the radio resources in a unified manner. This can enhance the use efficiency of the radio resources in the whole system.

Consequently, the radio resources in the UE can be sliced in the UE-to-UE indirect communication through the relay UE.

The aforementioned method may be applied to the communication between the UE and the NW through the relay UE. This can produce the same advantages as previously described.

In the communication between the UE and the NW through the relay UE, the relay UE may notify the gNB of the information notified from the relay UE to the UE-RX. The method for the relay UE to notify the gNB may be the Uu signaling. The relay UE may give the notification, for example, via the Uu RRC signaling. Consequently, the gNB can slice the radio resources using the S-NSSAI in the communication between the UE and the NW through the relay UE.

In the communication between the UE and the NW through the relay UE, the relay UE may notify the CN node of the information notified from the relay UE to the UE-RX. The method for the relay UE to notify the gNB may be the Uu and N2 signaling. The relay UE may give the notification, for example, via the RRC signaling and the N2 signaling. The relay UE may give the notification, for example, via the NAS signaling. Consequently, the CN node can slice the radio resources using the S-NSSAI in the communication between the UE and the NW through the relay UE.

The method disclosed in the fifth embodiment enables the slicing in the UE-to-UE indirect communication through the relay UE or in the communication between the UE and the NW through the relay UE. The slicing in these communications can satisfy the QoS required for the service to be implemented.

In this invention, the UE in which the service data has been generated is the UE-TX. Suppose, for example, a UE 1 denotes the UE-TX and a UE 2 denotes the UE-RX. When the service data has been generated in the UE 2 and the UE 2 transmits the data to the UE 1, the disclosed methods should be applied by reading the UE 2 as the UE-TX and reading the UE 1 as the UE-RX. This can produce the same advantages as previously described.

The embodiments and the modifications are mere exemplifications, and can be freely combined. The arbitrary constituent elements of the embodiments and the modifications can be appropriately modified or omitted.

For example, a subframe in the embodiments and the modifications is an example time unit of communication in the fifth generation base station communication system. The subframe may be configured per scheduling. The processes described in the embodiments and the modifications as being performed per subframe may be performed per TTI, per slot, per sub-slot, or per mini-slot.

For example, the methods disclosed in the embodiments and its modifications may be applied not only to the vehicle-to-everything (V2X) services but also to services using the SL communication. The methods may be applied to, for example, the SL communication to be used in various services, for example, the proximity-based service, public safety, communication between wearable devices, and Device-to-Device communication in factories.

The embodiments can be freely combined, or appropriately modified or omitted. While the present invention is described in detail, the foregoing description is in all aspects illustrative and does not restrict the present invention. Therefore, numerous modifications and variations that have not yet been exemplified can be devised.

### EXPLANATION OF REFERENCE SIGNS

- 200, 210: communication system
- 202: communication terminal device (communication terminal)
- 203, 207, 213: base station device (base station)
- 217, 223-1, 224-1: base station device (base station)
- 224-2, 226-1, 226-2: base station device (base station)
- 204, 214: management device

## Claims

1. A communication system, comprising:
- a communication terminal;
- a base station configured to perform radio communication with the communication terminal; and
- a management device managing access to the communication terminal through the base station,
wherein the communication terminal starts a predefined process for changing Closed Access Group (CAG) information, and the management device transmits the CAG information to the communication terminal in response to starting the predefined process by the communication terminal.

2. The communication system according to claim 1,
wherein the predefined process is a process of transmitting a request for changing the CAG information to the management device, the process being performed by the communication terminal.

3. The communication system according to claim 2,
wherein the communication terminal includes the request for changing the CAG information in another request, and transmits the request to the management device.

4. The communication system according to claim 1,
wherein the predefined process is a process of re-registering in a network, the process being performed by the communication terminal.

5. A communication terminal connected to a management device through a base station, the management device managing access to the communication terminal, wherein the communication terminal starts a predefined process for changing Closed Access Group (CAG) information, and causes the management device to transmit the CAG information to the communication terminal when starting the predefined process.

6. A management device managing access to a communication terminal connected through a base station,
wherein the management device transmits Closed Access Group (CAG) information to the communication terminal, in response to starting a predefined process by the communication terminal for changing the CAG information.
